# EUROPEAN PATENT SPECIFICATION

(11) **EP 2 993 039 B1**
(45) Date of publication and mention of the grant of the patent: **11.07.2018**
(21) Application number: 14792351.0
(22) Date of filing: 25.04.2014
(51) Int. Cl.: B32B 27/12, B32B 27/20, C08K 3/22, C08L 83/06, C09D 5/18, C09D 183/06, C09J 7/25, F21V 3/04

(54) **FLAME-RETARDANT SHEET AND FLAME-RETARDANT COMPOSITE MEMBER**
FLAMMFESTE FOLIE UND FLAMMFESTES VERBUNDELEMENT
FEUILLE IGNIFUGE, ET ÉLÉMENT COMPOSITE IGNIFUGE

(30) Priority: 01.05.2013 JP 2013096228; 01.05.2013 JP 2013096229; 22.04.2014 JP 2014088073
(43) Date of publication of application: 09.03.2016
(73) Proprietor: Nitto Denko Corporation, Ibaraki-shi, Osaka 567-8680 (JP)
(72) Inventor: SUGINO, Yusuke, Ibaraki-shi Osaka 567-8680 (JP); NAGASAKI, Kunio, Ibaraki-shi Osaka 567-8680 (JP); HIDA, Takafumi, Ibaraki-shi Osaka 567-8680 (JP); NAKAYAMA, Yusuke, Ibaraki-shi Osaka 567-8680 (JP)
(74) Representative: Müller-Boré & Partner Patentanwälte PartG mbB
(86) International application number: PCT/JP2014/061668
(87) International publication number: WO 2014/178340

(56) References cited:
- WO-A1-2013/021837
- WO-A1-2013/021937
- JP-A- 2003 100 149
- JP-A- 2006 503 121
- JP-A- 2009 209 264
- DATABASE WPI Week 201315 Thomson Scientific, London, GB; AN 2013-C38307 XP002763464, & WO 2013/021937 A1 (NITTO DENKO CORP) 14 February 2013 (2013-02-14)

## Description

The present invention relates to a flame-retardant sheet, and more specifically, to a flame-retardant sheet including a coating film formed of a specific silicone resin composition and an adhesive layer or a pressure-sensitive adhesive layer. The present invention also relates to a lighting apparatus using the flame-retardant sheet. The present invention also relates to a flame-retardant composite material, and more specifically, to a flame-retardant composite material including the flame-retardant sheet on at least one surface side of a base material, and having the adhesive layer or the pressure-sensitive adhesive layer between the base material and the coating film. The present invention also relates to a lighting apparatus using the flame-retardant composite material.

A halogen-based flame retardant has heretofore been widely used as a flame-retarding agent for making a paint composition flame-retardant (see, for example, Patent Literature 1). However, in terms of environmental protection, the method cannot be said to be preferred because the method involves the problem of dioxin or chlorofluorocarbon produced from the halogen-based flame retardant. In addition, an inorganic flame retardant such as aluminum hydroxide has been used as a flame-retarding agent for making the paint composition flame-retardant. However, aluminum hydroxide involves a problem in that aluminum hydroxide reduces the physical properties, such as physical characteristics and water resistance, of a paint and a base material having applied thereto the paint.

A method involving coating the top of a plastic with an inorganic paint to make the plastic flame-retardant is also available. However, it is difficult to coat the plastic with the inorganic paint so that the paint may have a large thickness because the paint has low flexibility and is hence liable to break. Therefore, the paint itself has flame retardancy, but in the case of a composite thereof with the plastic, heat by flame contact is transferred to the plastic to carbonize, or spread fire to, the plastic. In addition, in the case of a paint containing an organic binder, the organic binder carbonizes at the time of flame contact. Therefore, it is difficult to use the plastic coated with any such paint in applications where non-carbonizability is required such as a railway rolling stock application.

A cover obtained by applying an inorganic coating agent to a glass fiber sheet has heretofore been known as a cover for lighting for railway rolling stocks. However, a general cover obtained by applying the inorganic coating agent to the glass fiber sheet or impregnating the sheet with the agent involves a problem in that the cover has low incombustibility when the binder of the agent contains an organic component. Meanwhile, the cover has the following drawback when the binder is an inorganic component. The cover has low flexibility and is hence liable to break.

There has been disclosed a light-diffusing sheet including at least one glass fiber fabric and a pair of resin layers between which the glass fiber fabric is sandwiched, in which the resin layers are each constituted of a thermosetting resin or a photocurable resin such as a vinyl ester (see, for example, Patent Literature 2). In addition, there has been disclosed a glass fiber sheet including: at least one glass fiber fabric; a resin coating layer formed of a thermosetting resin formed by impregnating the glass fiber fabric with the resin and solidifying the resin; and a bead layer on at least one surface of the resin coating layer (see, for example, Patent Literature 3). However, each of those light-diffusing sheets has insufficient incombustibility and has low flexibility.
PTL 4 discloses adhesive tape or sheet has an adhesive layer on one surface of a base. PTL 5 describes a light diffusing flame-resistant composite member.

### Citation List

### Patent Literature

[PTL 1] JP 07-186333 A
[PTL 2] JP 4491778 B2
[PTL 3] JP 4539349 B2
[PTL 4] WO 2013/021937 A1
[PTL 5] EP 2 607 410 A1

An object of the present invention is to provide (1) a flame-retardant sheet showing extremely high flame retardancy, (2) a flame-retardant composite material using the flame-retardant sheet and showing extremely high flame retardancy despite including a combustible base material, (3) a lighting apparatus using the flame-retardant sheet, and (4) a lighting apparatus using the flame-retardant composite material.

The inventors of the present invention have made extensive investigations to achieve the object, and as a result, have found that a flame-retardant sheet having extremely high flame retardancy is obtained by constructing a laminated structural body including a coating film formed of a specific silicone resin composition and an adhesive layer or a pressure-sensitive adhesive layer. Thus, the inventors have completed the present invention.

In addition, the inventors of the present invention have made extensive investigations to achieve the object, and as a result, have found that a composite material having extremely high flame retardancy is obtained by arranging the flame-retardant sheet on at least one surface side of a specific base material, and arranging the adhesive layer or the pressure-sensitive adhesive layer between the base material and the coating film. Thus, the inventors have completed the present invention.

A flame-retardant sheet according to one embodiment of the present invention includes: a coating film formed of a silicone resin composition (C) containing at least an inorganic oxide particle-containing condensation-reactive silicone resin, wherein the content of the inorganic oxide particles in the inorganic oxide particle-containing condensation-reactive silicone resin is 1 wt% to 30 wt%; and an adhesive layer or a pressure-sensitive adhesive layer, wherein the silicone resin composition (C) contains: a condensation-reactive silicone resin (A) formed of a cross-linked structural body in which inorganic oxide particles dispersed in a polysiloxane resin having a condensation-reactive group and the polysiloxane resin are cross-linked by a chemical bond; and additional inorganic particles (B), wherein the additional inorganic particles (B) are not chemically bonded to the polysiloxane resin having a condensation-reactive group and wherein the content of the additional inorganic particles (B) in the silicone resin composition (C) is from 0.1 part by weight to 500 parts by weight with respect to 100 parts by weight of the condensation reactive silicone resin (A).

In a preferred embodiment, the inorganic particles (B) include at least one kind selected from glass frits, silica particles, alumina particles, aluminum hydroxide particles, magnesium hydroxide particles, tin oxide particles, and clay mineral particles.

In a preferred embodiment, the glass frits serving as the inorganic particles (B) each have a yield point of 300°C or more and 700°C or less.

In a preferred embodiment, the glass frits serving as the inorganic particles (B) are each formed of at least one kind of component selected from silicic acid, boric acid, borosilicic acid, aluminum oxide, calcium oxide, sodium oxide, lithium oxide, and phosphorus oxide.

In a preferred embodiment, the glass frits serving as the inorganic particles (B) are each formed of a component containing at least phosphorus oxide.

In a preferred embodiment, the glass frits serving as the inorganic particles (B) have an average particle diameter of from 0.1 µm to 1,000 µm.

In a preferred embodiment, the flame-retardant sheet according to the embodiment of the present invention has incombustibility in a combustion test of a railway rolling stock material combustion test.

In a preferred embodiment, the flame-retardant sheet according to the embodiment of the present invention has a gross calorific value per 10 minutes of 30 MJ/m² or less, a maximum heat generation rate of 300 kW/m² or less, and an ignition time of 60 seconds or more in a cone calorimeter test of a railway rolling stock material combustion test.

In a preferred embodiment, the flame-retardant sheet according to the embodiment of the present invention is used as a transporting machine interior material, wherein the transporting machine interior material includes a lighting cover.

A flame-retardant composite material according to one embodiment of the present invention includes the flame-retardant sheet according to the embodiment of the present invention on at least one surface side of a base material, the flame-retardant composite material having the adhesive layer or the pressure-sensitive adhesive layer between the base material and the coating film.

A lighting apparatus according to one embodiment of the present invention is a lighting apparatus using the flame-retardant sheet according to the embodiment of the present invention, including at least: a light source for generating light to be used in lighting; and a lighting cover arranged to cover the light source and including the flame-retardant sheet, in which the light from the light source is transmitted by the flame-retardant sheet to be output.

A lighting apparatus according to one embodiment of the present invention is a lighting apparatus using the flame-retardant composite material according to the embodiment of the present invention, including at least: a light source for generating light to be used in lighting; and a lighting cover arranged to cover the light source and including the flame-retardant composite material, in which the light from the light source is transmitted by the flame-retardant composite material to be output.

The flame-retardant sheet according to the embodiment of the present invention includes the coating film formed of a specific silicone resin composition, and the adhesive layer or the pressure-sensitive adhesive layer. Accordingly, the sheet is extremely excellent in flame retardancy, and at the time of flame contact, the sheet does not allow fire to spread, and the sheet preferably neither ignites nor carbonizes. In addition, the flame-retardant sheet according to the embodiment of the present invention is additionally improved in strength of the coating film and hence shows extremely high flame retardancy. Accordingly, at the time of flame contact, the sheet does not allow fire to spread, and the sheet neither ignites nor carbonizes. Accordingly, the flame-retardant sheet according to the embodiment of the present invention is particularly useful as an interior material for transporting machines such as a railway rolling stock, an aircraft, an automobile, a ship, an elevator, and an escalator, a building material, a display material, a home appliance material, or an electronic circuit material. In addition, the sheet can be particularly suitably utilized as the lighting cover of a lighting apparatus.

The flame-retardant composite material according to the embodiment of the present invention includes the flame-retardant sheet according to the embodiment of the present invention on at least one surface side of the base material, the flame-retardant composite material having the adhesive layer or the pressure-sensitive adhesive layer between the base material and the coating film. Accordingly, the material is extremely excellent in flame retardancy, and even when a main component for the base material is combustible, at the time of flame contact, the material does not allow fire to spread, and the material preferably neither ignites nor carbonizes. In addition, the flame-retardant composite material according to the embodiment of the present invention is additionally improved in strength of the coating film and hence shows extremely high flame retardancy. Accordingly, even when the thickness of the base material is relatively small, at the time of flame contact, the material does not allow fire to spread, and the material neither ignites nor carbonizes. Accordingly, the flame-retardant composite material according to the embodiment of the present invention is particularly useful as an interior material for transporting machines such as a railway rolling stock, an aircraft, an automobile, a ship, an elevator, and an escalator, a building material, a display material, a home appliance material, or an electronic circuit material. In addition, the material can be particularly suitably utilized as the lighting cover of a lighting apparatus.

FIG. 1 is a schematic sectional view for illustrating an example of a flame-retardant sheet of the present invention.
FIG. 2 is a schematic sectional view for illustrating an example of a flame-retardant composite material of the present invention.
FIG. 3 is a perspective view of a combustion test apparatus used in a combustion test in Examples.
FIG. 4 is a schematic view of a combustion test apparatus used in a cone calorimeter test in Examples.

### <<Flame-retardant Sheet>>

A flame-retardant sheet of the present invention includes a coating film formed of a silicone resin composition (C) containing at least an inorganic oxide particle-containing condensation-reactive silicone resin (sometimes referred to as "inorganic oxide particle-containing silicone resin coating film") and an adhesive layer or a pressure-sensitive adhesive layer. The flame-retardant sheet of the present invention only needs to include the inorganic oxide particle-containing silicone resin coating film and the adhesive layer or the pressure-sensitive adhesive layer, and may include any appropriate other layer to the extent that the effects of the present invention are not impaired.

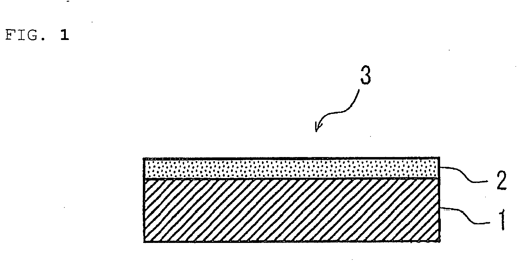

FIG. **1** is a schematic sectional view for illustrating an example of the flame-retardant sheet of the present invention. In this example, a flame-retardant sheet **3** includes an adhesive layer **1** on one surface side of a coating film (coating layer) **2** formed of an inorganic oxide particle-containing condensation-reactive silicone resin. The adhesive layer **1** may be a pressure-sensitive adhesive layer.

### [Inorganic Oxide Particle-containing Condensation-reactive Silicone Resin]

Any appropriate polysiloxane resin can be adopted as the "condensation-reactive silicone resin" of the "inorganic oxide particle-containing condensation-reactive silicone resin" in the present invention as long as the resin is a silicone resin (polysiloxane resin) having a condensation-reactive group. Examples of such polysiloxane resin include : a condensation-reactive group-containing polysiloxane containing a D unit and a T unit as basic constituent units (hereinafter sometimes referred to as "D-T-unit condensation-reactive group-containing polysiloxane"); a condensation-reactive group-containing polysilsesquioxane containing a T unit as a basic constituent unit (hereinafter sometimes referred to as "condensation-reactive group-containing polysilsesquioxane"); a condensation-reactive group-containing polysilsesquioxane containing a D unit as a basic constituent unit; and a condensation-reactive group-containing polysiloxane containing an M unit and a Q unit as basic constituent units. Such resins may be used alone or in combination.

Of the condensation-reactive silicone resins, a condensation-reactive group-containing polysilsesquioxane, a D-T-unit condensation-reactive group-containing polysiloxane, or a combination of a condensation-reactive group-containing polysilsesquioxane and a D-T-unit condensation-reactive group-containing polysiloxane is preferred from the viewpoint of being able to impart flexibility to the composite material. In the present invention, a D-T-unit condensation-reactive group-containing polysiloxane or a combination of a condensation-reactive group-containing polysilsesquioxane and a D-T-unit condensation-reactive group-containing polysiloxane is particularly preferred.

Examples of the condensation-reactive group include a silanol group, an alkoxysilyl group (such as a C₁₋₆ alkoxysilyl group), a cycloalkyloxysilyl group (such as a C₃₋₆ cycloalkyloxysilyl group), and an aryloxysilyl group (such as a C₆₋₁₀ aryloxysilyl group) . Of those, as the condensation-reactive group, a silanol group, an alkoxysilyl group, a cycloalkyloxysilyl group, or an aryloxysilyl group is preferred, and a silanol group or an alkoxysilyl group is particularly preferred.

The D-T-unit condensation-reactive group-containing polysiloxane specifically contains, as basic constituent units, a D unit represented by the following formula (1) and a T unit represented by the following formula (2).

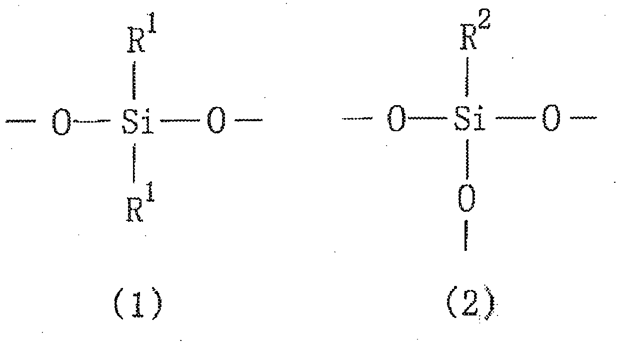

In the formula (1), R¹'s may be identical to or different from each other, and each represent a monovalent hydrocarbon group selected from a saturated hydrocarbon group and an aromatic hydrocarbon group. In the formula (2), R² represents a monovalent hydrocarbon group selected from a saturated hydrocarbon group and an aromatic hydrocarbon group.

Examples of the saturated hydrocarbon group represented by any one of R¹'s and R² include: a linear or branched alkyl group having 1 to 6 carbon atoms such as a methyl, ethyl, propyl, isopropyl, butyl, isobutyl, pentyl, or hexyl group; and a cycloalkyl group having 3 to 6 carbon atoms such as a cyclopentyl or cyclohexyl group. In addition, the aromatic hydrocarbon group represented by any one of R¹'s and R² is, for example, an aryl group having 6 to 10 carbon atoms such as a phenyl or naphthyl group.

R¹'s and R² each represent preferably an alkyl group having 1 to 6 carbon atoms or an aryl group having 6 to 10 carbon atoms, more preferably a methyl group.

The D units each represented by the formula (1) in the D-T-unit condensation-reactive group-containing polysiloxane, which may be identical to or different from each other, are preferably identical to each other. In addition, the T units each represented by the formula (2) in the D-T-unit condensation-reactive group-containing polysiloxane, which may be identical to or different from each other, are preferably identical to each other.

The D-T-unit condensation-reactive group-containing polysiloxane is a partial condensate of corresponding silicone monomers (e.g., a partial condensate of a bifunctional silicone monomer such as a dialkyl (or aryl) dialkoxysilane and a trifunctional silicone monomer such as an alkyl(or aryl)trialkoxysilane), and contains, in its constituent units, a D unit, a T unit, and a group represented by the following formula (3). The group represented by the formula (3) is bonded to a silicon atom and is present at a molecular terminal.

-OR³ (3)

R³ represents a monovalent hydrocarbon group selected from a saturated hydrocarbon group and an aromatic hydrocarbon group. Examples of the saturated hydrocarbon group and the aromatic hydrocarbon group include the same examples as those of the saturated hydrocarbon group and the aromatic hydrocarbon group each represented by any one of R¹'s in the formula (1). R³ represents preferably a saturated hydrocarbon group, more preferably an alkyl group having 1 to 6 carbon atoms, still more preferably a methyl group or an ethyl group.

Examples of such D-T-unit condensation-reactive group-containing polysiloxane include an alkoxysilyl group (such as a C₁₋₆ alkoxysilyl group)-containing polymethylsiloxane, an alkoxysilyl group (such as a C₁₋₆ alkoxysilyl group)-containing polymethylphenylsiloxane, and an alkoxysilyl group (such as a C₁₋₆ alkoxysilyl group) -containing polyphenylsiloxane. Those D-T-unit alkoxysilyl group-containing polysiloxanes may be used alone or in combination.

Of the D-T-unit condensation-reactive group-containing polysiloxanes, a C₁₋₆ alkoxysilyl group-containing polysiloxane is preferred, methoxysilyl group-containing polysiloxane or ethoxysilyl group-containing polysiloxane is more preferred, and methoxysilyl group-containing polymethylsiloxane or ethoxysilyl group-containing polymethylsiloxane is still more preferred.

An upper limit for the content of the condensation-reactive group (such as an alkoxysilyl group) of such D-T-unit condensation-reactive group-containing polysiloxane is, for example, preferably 30 wt%, more preferably 25 wt%, and a lower limit for the content is preferably 8 wt%, more preferably 10 wt%, still more preferably 12 wt%. The content of the condensation-reactive group (such as an alkoxysilyl group) can be determined with a differential weight reduction-measuring apparatus (TGA) from a weight reduction ratio when the temperature of the polysiloxane is increased from room temperature to 300°C.

An upper limit for the number-average molecular weight (in terms of standard polystyrene measured by GPC) of the D-T-unit condensation-reactive group-containing polysiloxane is preferably 6,000, more preferably 5,500, still more preferably 5,300, and a lower limit for the number-average molecular weight is preferably 800, more preferably 1,000, still more preferably 1,200.

A product (D-T-unit alkoxysilyl group-containing polysiloxane) commercially available under, for example, the following trade name may also be used as the D-T-unit condensation-reactive group-containing polysiloxane: "X-40-9246", "X-40-9250", or "X-40-9227" (all of which are manufactured by Shin-Etsu Chemical Co., Ltd.).

The condensation-reactive group-containing polysilsesquioxane specifically contains a T unit represented by the formula (2) as a basic constituent unit. The T units each represented by the formula (2) in the condensation-reactive group-containing polysilsesquioxane, which may be identical to or different from each other, are preferably identical to each other.

The condensation-reactive group-containing polysilsesquioxane is a partial condensate of a corresponding silicone monomer (e.g., a partial condensate of a trifunctional silicone monomer such as an alkyl(or aryl)trialkoxysilane), and contains, in its constituent units, a T unit and a group represented by the following formula (4). The group represented by the formula (4) is bonded to a silicon atom and is present at a molecular terminal.

-OR⁴ (4)

R⁴ represents a monovalent hydrocarbon group selected from a saturated hydrocarbon group and an aromatic hydrocarbon group. Examples of the saturated hydrocarbon group and the aromatic hydrocarbon group include the same examples as those of the saturated hydrocarbon group and the aromatic hydrocarbon group each represented by any one of R¹'s in the formula (1). R⁴ represents preferably a saturated hydrocarbon group, more preferably an alkyl group having 1 to 6 carbon atoms, still more preferably a methyl group or an ethyl group.

The condensation-reactive group-containing polysilsesquioxane may be any one of, for example, a random type, a ladder type, arid a cage type. The condensation-reactive group-containing polysilsesquioxane is most preferably of a random type from the viewpoint of the flexibility of the flame-retardant sheet. Such condensation-reactive group-containing polysilsesquioxanes may be used alone or in combination.

The condensation-reactive group-containing polysilsesquioxane is preferably a C₁₋₆ alkoxysilyl group-containing polysilsesquioxane, more preferably methoxysilyl group-containing polysilsesquioxane or ethoxysilyl group-containing polysilsesquioxane, still more preferably methoxysilyl group-containing polymethylsilsesquioxane or ethoxysilyl group-containing polymethylsilsesquioxane.

An upper limit for the content of the condensation-reactive group (such as an alkoxysilyl group) of such condensation-reactive group-containing polysilsesquioxane is preferably 50 wt%, more preferably 48 wt%, still more preferably 46 wt%, and a lower limit for the content is preferably 10 wt%, more preferably 15 wt%, still more preferably 20 wt%. The content of the condensation-reactive group (such as an alkoxysilyl group) can be determined with a differential weight reduction-measuring apparatus (TGA) from a weight reduction ratio when the temperature of the polysilsesquioxane is increased from room temperature to 300°C.

An upper limit for the number-average molecular weight (in terms of standard polystyrene measured by GPC) of the condensation-reactive group-containing polysilsesquioxane is preferably 6,000, more preferably 3,500, still more preferably 3,000, and a lower limit for the number-average molecular weight is preferably 200, more preferably 300, still more preferably 400.

A product (alkoxysilyl group-containing polysilsesquioxane) commercially available under, for example, the following trade name may also be used as the condensation-reactive group-containing polysilsesquioxane: "KC-89", "KR-500", or "X-40-9225" (all of which are manufactured by Shin-Etsu Chemical Co., Ltd.).

A product commercially available under, for example, the following trade name as a polysiloxane compound having a reactive silanol group in its molecule (terminal) may also be used as the condensation-reactive group-containing polysilsesquioxane: "X-21-3153" or "X-21-5841" (all of which are manufactured by Shin-Etsu Chemical Co., Ltd.).

The ratio of the total amount of the D-T-unit condensation-reactive group-containing polysiloxane and the condensation-reactive group-containing polysilsesquioxane in the total of the polysiloxane resin is preferably 50 wt% or more, more preferably 70 wt% or more, still more preferably 90 wt% or more.

In the present invention, the polysiloxane resin is preferably a polysiloxane resin having an alkoxysilyl group and/or a silanol group in a molecule thereof (at a terminal thereof), and having a total content of such groups (an alkoxysilyl group and a silanol group) of from 8 wt% to 48 wt%, the polysiloxane resin being cross-linked with inorganic oxide particles by a chemical bond. An upper limit for the total content of an alkoxysilyl group and a silanol group is preferably 30 wt%, and a lower limit for the total content is preferably 10 wt%.

In the present invention, the condensation-reactive silicone resin is preferably any one of the condensation-reactive group-containing polysilsesquioxane, the D-T-unit condensation-reactive group-containing polysiloxane, and a combination of the condensation-reactive group-containing polysilsesquioxane and the D-T-unit condensation-reactive group-containing polysiloxane particularly from the viewpoints of, for example, the flexibility, strength, and incombustibility of the flame-retardant sheet. In this case, an upper limit for a ratio between the D-T-unit condensation-reactive group-containing polysiloxane and the condensation-reactive group-containing polysilsesquioxane (former/latter (weight ratio)) is preferably 4.9, more preferably 3, still more preferably 2, and a lower limit for the ratio is preferably 0, more preferably 0.02. The upper limit for the ratio between the D-T-unit condensation-reactive group-containing polysiloxane and the condensation-reactive group-containing polysilsesquioxane (former/latter (weight ratio)) is preferably 100. In addition, the D-T-unit condensation-reactive group-containing polysiloxane is more preferably adopted as the condensation-reactive silicone resin because the flexibility can be additionally improved.

The "condensation-reactive silicone resin" of the "inorganic oxide particle-containing condensation-reactive silicone resin" in the present invention is a silicone resin (polysiloxane resin) having a condensation-reactive group. Such polysiloxane resin having a condensation-reactive group may further contain a polysiloxane resin having a silanol group except (i) the condensation-reactive group-containing polysilsesquioxane containing a T unit as a basic constituent unit, (ii) the condensation-reactive group-containing polysiloxane containing a D unit and a T unit as basic constituent units, and (iii) the combination of the condensation-reactive group-containing polysilsesquioxane containing a T unit as a basic constituent unit, and the condensation-reactive group-containing polysiloxane containing a D unit and a T unit as basic constituent units.

In the present invention, a cross- linked structural body formed through the cross-linking of the condensation-reactive silicone resin with inorganic oxide particles by a chemical bond is used as the inorganic oxide particle-containing condensation-reactive silicone resin from the viewpoints of the heat resistance and strength of the flame-retardant sheet. In particular, a condensation-reactive silicone resin (A) formed of a cross-linked structural body in which inorganic oxide particles dispersed in a polysiloxane resin having a condensation-reactive group and the polysiloxane resin are cross-linked by a chemical bond is used. The condensation-reactive silicone resin (A) is described below.

The above-mentioned polysiloxane resin is used as the polysiloxane resin having a condensation-reactive group. Such polysiloxane resin having a condensation-reactive group is preferably the condensation-reactive group-containing polysilsesquioxane, the D-T-unit condensation-reactive group-containing polysiloxane, or the combination of the condensation-reactive group-containing polysilsesquioxane and the D-T-unit condensation-reactive group-containing polysiloxane.

The inorganic oxide particles only need to be inorganic oxide particles each having a reactive functional group on its surface. Examples of such inorganic oxide particles include silica (SiO₂ or SiO), alumina (Al₂O₃), a glass frit, antimony-doped tin oxide (ATO), titanium oxide (titania, TiO₂), and zirconia (ZrO₂). The inorganic oxide particles may be composite inorganic oxide particles each formed of two or more kinds of inorganic oxides. Of those, silica is particularly preferred. Such inorganic oxide particles may be used alone or in combination.

Examples of the reactive functional group include a hydroxyl group, an isocyanate group, a carboxyl group, an epoxy group, an amino group, a mercapto group, a vinyl-type unsaturated group, a halogen atom, and an isocyanurate group. Of those, a hydroxyl group is preferred as the reactive functional group. The hydroxyl groups on the surface of silica particles are present as silanol groups.

An upper limit for the average particle diameter (primary particle diameter) of the inorganic oxide particles is preferably 500 µm, more preferably 100 µm, still more preferably 10 µm, particularly preferably 1 µm, and a lower limit for the average particle diameter is preferably 1 nm. It should be noted that the average particle diameter can be measured by, for example, a dynamic light scattering method.

The particle size distribution of the inorganic oxide particles is preferably narrow, and the particles are preferably in such a monodispersed state that the particles are dispersed while maintaining the primary particle diameter. In addition, the surface potential of each of the inorganic oxide particles is preferably present in an acidic region (e.g., at a pH of from 2 to 5, preferably at a pH of from 2 to 4). Each of the particles only needs to have such surface potential at the time of a reaction with the polysiloxane resin.

Colloidal inorganic oxide particles are preferably used as the inorganic oxide particles. Examples of the colloidal inorganic oxide particles include colloidal silica, colloidal alumina (alumina sol), and colloidal tin oxide (tin oxide water dispersion).

As described in, for example, JP 53-112732 A, JP 57-9051 B2, and JP 57-51653 B2, an example of the colloidal silica is a colloid of silicon dioxide (silicic anhydride) fine particles (having an average particle diameter of preferably from 5 nm to 1,000 nm, more preferably from 10 nm to 100 nm).

In addition, the colloidal silica may contain, for example, alumina or sodium aluminate as required, and may also contain a stabilizer such as an inorganic base (e.g., sodium hydroxide, potassium hydroxide, lithium hydroxide, or ammonia) or an organic base (e.g., tetramethylammonium) as required.

Such colloidal silica is not particularly limited, and may be produced by a known sol-gel method or the like, and specific examples thereof include sol-gel methods described in Werner Stober et al; J. Colloid and Interface Sci., 26, 62-69 (1968), Rickey D. Badley et al; Langmuir 6., 792-801 (1990), and Journal of the Japan Society of Colour Material, 61 [9] 488-493 (1988).

The colloidal silica is preferably in a bare state without being subjected to any surface treatment. The colloidal silica has a silanol group as a surface functional group.

In addition, a commercial product can be used as such colloidal silica, and specific examples thereof include: products available under the trade names "SNOWTEX-XL", "SNOWTEX-YL", "SNOWTEX-ZL", "PST-2", "SNOWTEX-20", "SNOWTEX-30", "SNOWTEX-C", "SNOWTEX-O", "SNOWTEX-OS", "SNOWTEX-OL", and "SNOWTEX-50" (all of which are manufactured by Nissan Chemical Industries, Ltd.); and products available under the trade names "Adelite AT-30", "Adelite AT-40", and "Adelite AT-50" (all of which are manufactured by Nippon Aerosil Co., Ltd.). Of those, a product available under the trade name "SNOWTEX-O", "SNOWTEX-OS", or "SNOWTEX-OL" is particularly preferred.

A commercial product can be used also as the colloidal inorganic particles other than the colloidal silica. Specific examples thereof include: alumina sol (hydrosol) such as products available under the trade names "ALUMINASOL 100", "ALUMINASOL 200", and "ALUMINASOL 520" (all of which are manufactured by Nissan Chemical Industries, Ltd.) ; titania sol (hydrosol) such as products available under the trade name "TTO-W-5" (manufactured by Ishihara Sangyo Kaisha, Ltd.) and the trade name "TS-020" (manufactured by Tayca Corporation); and tin oxide water dispersions such as products available under the trade names "SN-100D" and "SN-100S" (all of which are manufactured by Ishihara Sangyo Kaisha, Ltd.).

In the present invention, the inorganic oxide particles are preferably colloidal silica having a primary particle diameter in the range of from 1 nm to 500 µm and a surface potential in the pH range of from 2 to 5, the colloidal silica having, on its surface, a silanol group that chemically bonds to the polysiloxane resin to cross-link the polysiloxane resin.

An upper limit for the content of the inorganic oxide particles in the inorganic oxide particle-containing condensation-reactive silicone resin (or the content of the inorganic oxide particles in the coating film) is 30 wt%, preferably 20 wt%, more preferably 15 wt%, and a lower limit for the content is 1 wt%, preferably 2 wt%, more preferably 3 wt%. When the content of the inorganic oxide particles is excessively small, the mechanical strength of the coating film is liable to reduce, and when the content of the inorganic oxide particles is excessively large, the coating film is liable to become brittle.

Next, a method of producing the inorganic oxide particle-containing condensation-reactive silicone resin is described.

The inorganic oxide particle-containing condensation-reactive silicone resin can be produced by, for example, causing the inorganic oxide particles and the polysiloxane resin having a condensation-reactive group (preferably the condensation-reactive group-containing polysilsesquioxane, the D-T-unit condensation-reactive group-containing polysiloxane, the combination of the condensation-reactive group-containing polysilsesquioxane and the D-T-unit condensation-reactive group-containing polysiloxane, or any one of these polymers and the polysiloxane resin having a silanol group) to react with each other in a solvent preferably in the presence of an acid. It should be noted that the polysiloxane resin has a functional group capable of reacting with the reactive functional group on the surface of each of the inorganic oxide particles. When the reactive functional group on the surface of each of the inorganic oxide particles is a silanol group, the condensation-reactive group reacts with the silanol group to form a cross-linked structure.

Examples of the solvent include: water; alcohols such as methanol, ethanol, 2-propanol, 2-methoxyethanol, and propylene glycol monomethyl ether; and mixtures thereof. Of those, the solvent is preferably a mixed solvent of water and an alcohol, more preferably a mixed solvent of water and 2-propanol, a mixed solvent of water, 2-propanol, and 2-methoxyethanol, or a mixed solvent of water, 2-propanol, and propylene glycol monomethyl ether.

Examples of the acid include: inorganic acids such as hydrochloric acid, nitric acid, sulfuric acid, and phosphoric acid; and organic acids such as acetic acid and p-toluenesulfonic acid. Of those, the acid is preferably an inorganic acid, more preferably nitric acid. Any such acid can be used as an aqueous solution. The usage amount of the acid only needs to be such an amount that the pH of a reaction system can be adjusted to from about 2 to 5 (preferably from about 2 to 4).

Any appropriate method can be adopted as a method for the reaction. Such method may be any one of, for example, (i) a method involving adding a mixed liquid of the polysiloxane resin and the solvent to a mixed liquid of the inorganic oxide particles and the solvent, (ii) a method involving adding the mixed liquid of the inorganic oxide particles and the solvent to the mixed liquid of the polysiloxane resin and the solvent, and (iii) a method involving adding, to the solvent, both the mixed liquid of the inorganic oxide particles and the solvent, and the mixed liquid of the polysiloxane resin and the solvent.

It should be noted that when the condensation-reactive group-containing polysilsesquioxane and the D-T-unit condensation-reactive group-containing polysiloxane are used in combination as the polysiloxane resins, the inorganic oxide particles, and a mixture of the condensation-reactive group-containing polysilsesquioxane and the D-T-unit condensation-reactive group-containing polysiloxane may be caused to react with each other. In addition, the following is permitted: first, the D-T-unit condensation-reactive group-containing polysiloxane is caused to react with the inorganic oxide particles, and then the condensation-reactive group-containing polysilsesquioxane is caused to react with the resultant. Further, the following is permitted: first, the condensation-reactive group-containing polysilsesquioxane is caused to react with the inorganic oxide particles, and then the D-T-unit condensation-reactive group-containing polysiloxane is caused to react with the resultant. When a method involving first causing the condensation-reactive group-containing polysilsesquioxane to react with the inorganic oxide particles, and then causing the D-T-unit condensation-reactive group-containing polysiloxane and/or the polysiloxane resin having a silanol group to react with the resultant, or a method involving causing the D-T-unit condensation-reactive group-containing polysiloxane and/or the polysiloxane resin having a silanol group to react with the inorganic oxide particles is adopted in the present invention, in the case where a coating film formed of a silicone resin is arranged on at least one surface of a base material by application, the flexibility of the coating film significantly improves.

An upper limit for a reaction temperature is preferably 180°C, more preferably 150°C, still more preferably 130°C, and a lower limit for the temperature is preferably 40°C, more preferably 50°C. In addition, an upper limit for a reaction time is preferably 24 hours, more preferably 12 hours, and a lower limit for the time is preferably 1 minute, more preferably 2 minutes.

After the completion of the reaction, the concentration and viscosity of the resultant are adjusted by removing the solvent by distillation as required. Thus, the silicone resin composition (C) containing at least the inorganic oxide particle-containing condensation-reactive silicone resin can be obtained.

In the present invention, the silicone resin composition (C) containing at least the inorganic oxide particle-containing condensation-reactive silicone resin contains the condensation-reactive silicone resin (A) formed of the cross-linked structural body in which the inorganic oxide particles dispersed in the polysiloxane resin having a condensation-reactive group and the polysiloxane resin are cross-linked by a chemical bond, and inorganic particles (B). In the case where such silicone resin composition is used, a sheet that is significantly improved in flame retardancy and hence does not allow fire to spread at the time of flame contact despite including a combustible base material and despite the fact that the thickness of the base material is relatively small, and by extension, a sheet that neither ignites nor carbonizes at the time are obtained.

### [Inorganic Particles (B)]

Examples of the inorganic particles (B) include silica particles, alumina particles, aluminum hydroxide particles, titanium oxide particles, magnesium oxide particles, magnesium hydroxide particles, tin oxide particles, zirconia particles, particles of a clay mineral (talc, zeolite, or the like), and glass frits. The inorganic particles (B) may be used alone or in combination. It should be noted that the inorganic particles (B) are not chemically bonded to the polysiloxane resin having a condensation-reactive group.

The inorganicparticles (B) are preferably the silica particles, the alumina particles, the aluminum hydroxide particles, the magnesium hydroxide particles, or the glass frits because a high flame-retarding effect is obtained even when the particles are used in a small amount. Further, the particles are more preferably the silica particles or the glass frits because transparency is obtained. In particular, the particles are more preferably the glass frits because a heat-generating property-suppressing effect is obtained in a cone calorimeter test.

Examples of the silica particles include : dry silica particles such as fumed silica particles or fused silica particles; wet silica particles; silica gel particles; and colloidal silica particles. Of those, the silica particles are preferably fumed silica particles such as Aerosil, more preferably hydrophobic fumed silica particles.

The yield point of each of the glass frits is preferably from 300°C to 700°C, more preferably from 300°C to 650°C, still more preferably from 300°C to 600°C. When the yield point of each of the glass frits is set to fall within the range, in the case where a flame-retardant sheet is produced, a suppressing effect on the calorific value of the composite material can be sufficiently expressed even in a cone calorimeter test.

Any appropriate glass frits can be adopted as the glass frits. Such glass frits are preferably inorganic particles (glass frits) having sinterability, more preferably inorganic particles (glass frits) each formed of at least one kind of component selected from silicic acid (or silicon oxide), boric acid (or boron oxide), borosilicic acid, aluminum oxide, calcium oxide, sodium oxide, lithium oxide, and phosphorus oxide. Typical examples of the glass frits include phosphate glass frits, borosilicate glass frits, alkali-free glass frits, and porcelain enamel frits . The glass frits are particularly preferably glass frits each formed of a component containing at least phosphorus oxide. In each of the glass frits each formed of the component containing at least phosphorus oxide, the content of phosphorus oxide is preferably from 5 wt% to 70 wt%. A lower limit for the content is preferably 10 wt%, more preferably 20 wt%, and an upper limit for the content is preferably 60 wt%, more preferably 50 wt%. When such glass frits are adopted, in the case where a flame-retardant sheet is produced, a suppressing effect on the calorific value of the composite material can be sufficiently expressed even in a cone calorimeter test.

The average particle diameter of the glass frits is preferably from 0.1 µm to 1,000 µm. A lower limit for the average particle diameter of the glass frits is preferably 0.5 µm, more preferably 1 µm, still more preferably 2 µm. In addition, an upper limit for the average particle diameter of the glass frits is preferably 500 µm, more preferably 300 µm, still more preferably 150 µm. When the average particle diameter of the glass frits is set to fall within the range, in the case where a flame-retardant sheet is produced, a suppressing effect on the calorific value of the composite material can be sufficiently expressed even in a cone calorimeter test.

Inorganic particles each having a hollow structure may be used as the inorganic particles (B). Examples of such inorganic particles include silica having a hollow structure and glass frits (e.g., phosphate glass frits) each having a hollow structure (including hollow glass beads).

An upper limit for the average particle diameter (primary particle diameter) of the inorganic particles (B) is preferably 500 µm, more preferably 300 µm, still more preferably 200 µm, particularly preferably 100 µm, and a lower limit for the average particle diameter is preferably 1 nm. It should be noted that the average particle diameter can be measured by, for example, a dynamic light scattering method.

In the present invention, the content of the inorganic particles (B) in the silicone resin composition (C) is from 0.1 part by weight to 500 parts by weight with respect to 100 parts by weight of the condensation-reactive silicone resin (A). An upper limit for the content is preferably 400 parts by weight, more preferably 300 parts by weight, and a lower limit for the content is preferably 0.5 part by weight, more preferably 1 part by weight, still more preferably 2 parts by weight.

The silicone resin composition containing the condensation-reactive silicone resin (A) and the inorganic particles (B) can be produced by, for example, adding the inorganic particles (B) to a silicone resin composition containing the condensation-reactive silicone resin (A) obtained by the above-mentioned method.

In the present invention, an additive such as a curing catalyst may be added to the silicone resin composition (C) as required.

In the present invention, an upper limit for the solid content concentration of the silicone resin composition (C) is preferably 95 wt%, more preferably 90 wt%, and a lower limit for the solid content concentration is preferably 30 wt%, more preferably 40 wt% from the viewpoints of, for example, its handleability, applicability, and impregnating property.

### [Adhesive Layer, Pressure-sensitive Adhesive Layer]

The flame-retardant sheet of the present invention includes the adhesive layer or the pressure-sensitive adhesive layer. Any appropriate thickness can be adopted as the thickness of such adhesive layer or pressure-sensitive adhesive layer depending on purposes to the extent that the effects of the present invention are not impaired. The thickness of such adhesive layer or pressure-sensitive adhesive layer is preferably from 0.1 µm to 300 µm, more preferably from 0.2 µm to 250 µm, still more preferably from 0.5 µm to 200 µm, particularly preferably from 1 µm to 150 µm.

A layer formed of any appropriate adhesive can be adopted as the adhesive layer. Examples of such adhesive include a natural rubber adhesive, an a-olefin-based adhesive, a urethane resin-based adhesive, an ethylene-vinyl acetate resin emulsion adhesive, an ethylene-vinyl acetate resin-based hot-melt adhesive, an epoxy resin-based adhesive, a vinyl chloride resin solvent-based adhesive, a chloroprene rubber-based adhesive, a cyanoacrylate-based adhesive, a silicone-based adhesive, a styrene-butadiene rubber solvent-based adhesive, a nitrile rubber-based adhesive, a nitrocellulose-based adhesive, a reactive hot-melt adhesive, a phenol resin-based adhesive, a modified silicone-based adhesive, a polyester-based hot-melt adhesive, a polyamide resin hot-melt adhesive, a polyimide-based adhesive, a polyurethane resin hot-melt adhesive, a polyolefin resin hot-melt adhesive, a polyvinyl acetate resin solvent-based adhesive, a polystyrene resin solvent-based adhesive, a polyvinyl alcohol-based adhesive, a polyvinylpyrrolidone resin-based adhesive, a polyvinyl butyral-based adhesive, a polybenzimidazole adhesive, a polymethacrylate resin solvent-based adhesive, a melamine resin-based adhesive, a urea resin-based adhesive, and a resorcinol-based adhesive. Such adhesives may be used alone or in combination.

The adhesives are classified into, for example, a thermosetting adhesive and a hot-melt adhesive depending on their adhesion forms. Such adhesives may be used alone or in combination.

When the thermosetting adhesive is heated, the adhesive thermally cures to solidify, thereby expressing its adhesive strength. Examples of the thermosetting adhesive include an epoxy-based thermosetting adhesive, a urethane-based thermosetting adhesive, and an acrylic thermosetting adhesive. The curing temperature of the thermosetting adhesive is, for example, from 100°C to 200°C.

When the hot-melt adhesive is heated, the adhesive melts or softens to thermally fuse with an adherend. After that, when the adhesive is cooled, the adhesive solidifies to adhere to the adherend. Examples of the hot-melt adhesive include a rubber-based hot-melt adhesive, a polyester-based hot-melt adhesive, a polyolefin-based hot-melt adhesive, an ethylene-vinyl acetate resin-based hot-melt adhesive, a polyamide resin hot-melt adhesive, and a polyurethane resin hot-melt adhesive. The hot-melt adhesive has a softening temperature (ring and ball method) of, for example, from 100°C to 200°C. In addition, the hot-melt adhesive has a melt viscosity of, for example, from 100 mPa·s to 30,000 mPa·s at 180°C.

In addition, a plastic film can be used as an adhesive by being thermally melted.

A layer formed of any appropriate pressure-sensitive adhesive can be adopted as the pressure-sensitive adhesive layer. Examples of such pressure-sensitive adhesive include a rubber-based pressure-sensitive adhesive (such as a synthetic rubber-based pressure-sensitive adhesive or a natural rubber-based pressure-sensitive adhesive), a urethane-based pressure-sensitive adhesive, an acrylic urethane-based pressure-sensitive adhesive, an acrylic pressure-sensitive adhesive, a silicone-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive, and a fluorine-based pressure-sensitive adhesive. Such pressure-sensitive adhesives may be used alone or in combination.

The pressure-sensitive adhesives are classified into, for example, an emulsion-type pressure-sensitive adhesive, a solvent-type pressure-sensitive adhesive, an ultraviolet light-cross-linkable (UV-cross-linkable) pressure-sensitive adhesive, an electron beam-cross-linkable (EB-cross-linkable) pressure-sensitive adhesive, and a thermofusible pressure-sensitive adhesive (hot-melt pressure-sensitive adhesive) depending on their pressure-sensitive adhesion forms. Such pressure-sensitive adhesives may be used alone or in combination.

### [Flame-retardant Sheet]

The flame-retardant sheet of the present invention can be produced by any appropriate method.

The flame-retardant sheet of the present invention can be produced by, for example, applying the silicone resin composition (C) containing at least the inorganic oxide particle-containing condensation-reactive silicone resin onto the adhesive layer or the pressure-sensitive adhesive layer formed on a peeling sheet (separator) to form the coating film (coating layer: flame-retardant silicone resin layer).

In addition, the flame-retardant sheet of the present invention can be produced by, for example, applying the silicone resin composition (C) containing at least the inorganic oxide particle-containing condensation-reactive silicone resin onto any appropriate resin base material to form the coating film, separately forming the adhesive layer or the pressure-sensitive adhesive layer on a peeling sheet (separator), and then bonding the resin base material side and the adhesive layer or the pressure-sensitive adhesive layer.

In addition, the flame-retardant sheet of the present invention can be produced by, for example, applying the silicone resin composition (C) containing at least the inorganic oxide particle-containing condensation-reactive silicone resin onto a thin material that expresses its adhesive property through heat melting to form the coating film.

In addition, the flame-retardant sheet of the present invention can be produced by, for example, applying the silicone resin composition (C) containing at least the inorganic oxide particle-containing condensation-reactive silicone resin onto a thin material to form the coating film, and applying the adhesive layer or the pressure-sensitive adhesive layer onto the surface of the thin material on a side opposite to the coating film.

Through the use of any appropriate application method such as kiss coating, gravure coating, bar coating, spray coating, knife coating, wire coating, dip coating, die coating, curtain coating, dispenser coating, screen printing, or metal mask printing as an application method for forming the adhesive layer or the pressure-sensitive adhesive layer or a method of applying the silicone resin composition (C), an applied film may be formed by direct application, followed by drying at, for example, a temperature of from 80°C to 150°C as required.

In order that the storage stability of the silicone resin composition (C) may be improved, and bubble defects and appearance unevenness at the time of the formation of the silicone resin composition (C) into a film may be reduced, a water-soluble organic solvent except an aliphatic monohydric alcohol is preferably added to the silicone resin composition (C) before its application. The usage amount of such water-soluble organic solvent except an a liphatic monohydric alcohol is preferably from 0.01 part by weight to 200 parts by weight, more preferably from 0.1 part by weight to 150 parts by weight with respect to 100 parts by weight of the silicone resin composition (C) (solid content).

Specific examples of the water-soluble organic solvent except an aliphatic monohydric alcohol include: glycol ether-based solvents such as methyl cellosolve (2-methoxyethanol), ethyl cellosolve (2-ethoxyethanol), ethylene glycol isopropyl ether, butyl cellosolve, carbitol, butyl carbitol, diethylene glycol acetate, ethylene glycol monophenyl ether, ethylene glycol monobenzyl ether, methoxymethoxy ethanol, propylene glycol monomethyl ether, propylene glycol monoethyl ether, and ethylene glycol monoacetate; glycol-based solvents such as ethylene glycol, tetraethylene glycol, propylene glycol, and dipropylene glycol; nitrogen-containing solvents such as N-methylpyrrolidone, dimethylformamide, and dimethylacetamide; and dimethyl sulfoxide. Such water-soluble organic solvents except an aliphatic monohydric alcohol may be used alone or in combination. A glycol ether-based solvent is preferred a s such water-soluble organic solvent except an aliphatic monohydric alcohol because the solvent has satisfactory solubility for a hydrolyzed alkoxysilane and a condensate thereof.

An upper limit for the thickness of the coating film is preferably 1,000 µm, more preferably 800 µm, still more preferably 500 µm, and a lower limit for the thickness is preferably 5 µm, more preferably 10 µm, still more preferably 20 µm.

The flame-retardant sheet of the present invention may include a protective layer on its surface on a side closer to the coating film formed of the silicone resin composition (C).

A main component for the protective layer is preferably a polymer. The protective layer is preferably, for example, at least one selected from the group consisting of an ultraviolet light-curable hard coat layer, a thermosetting hard coat layer, and an organic-inorganic hybrid hard coat layer. Such protective layer may be formed only of one layer, or may be formed of two or more layers.

The ultraviolet light-curable hard coat layer can be formed of a resin composition containing an ultraviolet light-curable resin. The thermosetting hard coat layer can be formed of a resin composition containing a thermosetting resin. The organic-inorganic hybrid hard coat layer can be formed of a resin composition containing an organic-inorganic hybrid resin.

More specific examples of curable compounds to be used for the above-mentioned resins include a monomer, an oligomer, a polymer, and a silazane compound each having at least one kind selected from the group consisting of a silanol group, a precursor of a silanol group (for example, an alkoxysilyl group or a chlorosilyl group), an acryloyl group, a methacryloyl group, a cyclic ether group, an amino group, and an isocyanate group. Of those, a monomer, an oligomer, or a polymer having a silanol group is preferred from the viewpoint that its surface hardly carbonizes at the time of its combustion.

The resin composition that can form the hard coat layer may further contain any appropriate additive depending on purposes. Examples of such additive include a photoinitiator, a silane coupling agent, a release agent, a curing agent, a curing accelerator, a diluent, an antiaging agent, a denaturant, a surfactant, a dye, a pigment, a discoloration inhibitor, an ultraviolet absorber, a softener, a stabilizer, a plasticizer, and an antifoaming agent. The kinds, the number, and the amounts of the additives contained in the resin composition that can form the hard coat layer may be set as appropriate depending on purposes.

Any appropriate thickness can be adopted as the thickness of the protective layer to the extent that the effects of the present invention are not impaired. Such thickness is preferably from 0.1 µm to 200 µm, more preferably from 0.2 µm to 100 µm, still more preferably from 0.5 µm to 50 µm. When the thickness of the protective layer falls within the range, the layer can express excellent scratch resistance without impairing the flame retardancy of the flame-retardant sheet of the present invention.

Any appropriate thickness can be adopted as the thickness of the flame-retardant sheet of the present invention depending on applications . An upper limit for such thickness is preferably 6,000 µm, more preferably 5,000 µm, still more preferably 4,000 µm, particularly preferably 3, 000 µm, and a lower limit for the thickness is preferably 50 µm, more preferably 90 µm, still more preferably 120 µm, particularly preferably 170 µm.

The flame-retardant sheet of the present invention has excellent flame retardancy and preferably has incombustibility. For example, the sheet hardly allows fire to spread or does not allow the fire to spread in a test in conformity with the combustion test of Japan Railway Rolling Stock & Machinery Association (general material; the 45° ethyl alcohol test of a railway rolling stock nonmetallic material). In addition, the surface of the sheet preferably shows no carbonization. It should be noted that the term "incombustibility" as used herein means the characteristic by which the surface of the material neither ignites nor carbonizes in the combustion test.

The flame-retardant sheet of the present invention has excellent flame retardancy, and preferably has a low calorific value and a low heat generation rate. For example, even in a test in conformity with the cone calorimeter test of Japan Railway Rolling Stock & Machinery Association (ceiling material; ISO 5660-1), the calorific value and maximum heat generation rate of the material can be reduced, and its ignition time can be delayed. The sheet preferably has a gross calorific value per 10 minutes of 30 MJ/m² or less, a maximum heat generation rate of 300 kW/m² or less, and an ignition time of 60 seconds or more.

The flame-retardant sheet of the present invention can be utilized as an interior material for transporting machines such as a railway rolling stock, an aircraft, an automobile, a ship, an elevator, and an escalator (transporting machine interior material), a building material, a display material, a home appliance material, or an electronic circuit material because the sheet is excellent in flame retardancy. In addition, the sheet can be suitably utilized as a lighting cover, in particular, a lighting cover serving as a transporting machine interior material.

The flame-retardant sheet of the present invention can be used as a material deformed from a plate-shaped product by thermoforming as well. Any appropriate method such as bending, press molding, vacuum forming, or pressure forming can be utilized as a method for the thermoforming of the plate-shaped product.

A functional layer such as an antifouling layer, an antistatic layer, a light-diffusing layer, an antireflection layer, an ultraviolet light-absorbing layer, a heat-shielding layer, a heat-insulating layer, a thermally-conductive layer, or a solvent-resistant layer can be provided to the flame-retardant sheet of the present invention, as long as the flame retardancy is not impaired.

The flame-retardant sheet of the present invention may contain any appropriate other component in a plastic-based base material containing an inorganic compound or the coating film, as long as the flame retardancyis not impaired. Such other components may be used alone or in combination.

Examples of the other component include another polymer component, a softener, an antioxidant, an antiaging agent, a curing agent, a plasticizer, a filler, a thermal initiator, a photoinitiator, an ultraviolet absorber, a photostabilizer, a colorant (a pigment, a dye, or the like), a solvent (an organic solvent), and a surfactant (such as an ionic surfactant, a silicone-based surfactant, or a fluorine-based surfactant).

### <<Flame-retardant Composite Material>>

A flame-retardant composite material of the present invention includes the flame-retardant sheet of the present invention on at least one surface side of a base material, the flame-retardant composite material having the adhesive layer or the pressure-sensitive adhesive layer between the base material and the coating film. That is, the flame-retardant composite material of the present invention includes the coating film formed of the silicone resin composition (C) containing at least the inorganic oxide particle-containing condensation-reactive silicone resin (sometimes referred to as "inorganic oxide particle-containing silicone resin coating film") on at least one surface side of the base material, and includes the adhesive layer or the pressure-sensitive adhesive layer between the base material and the coating film. The flame-retardant composite material of the present invention only needs to include the adhesive layer or the pressure-sensitive adhesive layer between the base material and the inorganic oxide particle-containing silicone resin coating film, and may include any appropriate other layer to the extent that the effects of the present invention are not impaired.

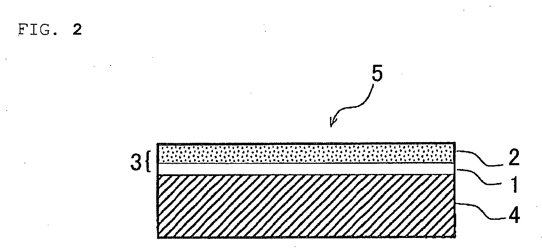

FIG. **2** is a schematic sectional view for illustrating an example of the flame-retardant composite material of the present invention. In this example, a flame-retardant composite material **5** includes, on one surface side of a base material **4,** the coating film (coating layer) **2** formed of an inorganic oxide particle-containing condensation-reactive silicone resin through the adhesive layer **1.** The adhesive layer **1** may be a pressure-sensitive adhesive layer. It should be noted that the material may include the coating film on each of both surface sides of the base material **4.** In this case, the adhesive layer only needs to be arranged on at least one surface side of the base material **4.**

### [Base Material]

The base material is not particularly limited as long as the base material serves as an obj ect to be provided with flame retardancy or to be improved in flame retardancy. The base material preferably has a sheet shape or a plate shape. It should be noted that the base material may have a curved surface. That is, the term "sheet shape" as used herein means not only a flat sheet shape but also a sheet shape having a three-dimensional curved surface, and the term "plate shape" as used herein means not only a flat plate shape but also a plate shape having a three-dimensional curved surface. It should be noted that a layered product formed of a pressure-sensitive adhesive or an adhesive is not included in the base material in the present invention.

Any appropriate thin material can be used as the base material, and examples thereof include: a plastic-based base material such as a plastic sheet (meaning not only a flat sheet but also a sheet having a three-dimensional curved surface) or a plastic plate-shaped product (meaning not only a flat plate-shaped product but also a plate-shaped product having a three-dimensional curved surface); a rubber-based base material such as a rubber sheet; a foam such as a foamed sheet; a paper-based base material such as paper; a fiber-based base material (excluding a glass fiber base material) such as a cloth, a nonwoven fabric, or a net; and a laminate thereof (such as a laminate of the plastic-based base material and any other base material or a laminate of the plastic sheets or plate-shaped products).

In the present invention, the plastic-based base material (including a laminate including at least the plastic-based base material) such as a plastic sheet or plate-shaped product can be suitably used as the base material. Amaterial for such plastic-based base material (i.e., a plastic material) is, for example, a thermoplastic resin or a thermosetting resin. Examples of the thermoplastic resin include: olefin-based resins each using an α-olefin as a monomer such as polyethylene (PE), polypropylene (PP), an ethylene-propylene copolymer, and an ethylene-vinyl acetate copolymer (EVA); polycarbonate (PC); polyester-based resins such as polyethylene terephthalate (PET), polyethylene naphthalate (PEN), and polybutylene terephthalate (PBT); polyvinyl chloride (PVC); a vinyl acetate-based resin; styrene-based resins such as polystyrene, an ABS resin, and an AS resin; an acrylic resin; polyacrylonitrile; polyphenylenesulfide (PPS); amide-based resins such as polyamide (nylon) and wholly aromatic polyamide (aramid); polyimide (PI); polyamide imide (PAI); polyether ether ketone (PEEK); polyarylate (PAR); polysulfone (PSF); polyether sulfone (PES); fluorine-based resins such as polytetrafluoroethylene (PTFE); cyclicpolyolefin; polyacetal (POM); and polyphenylene ether (including modified polyphenylene ether). In addition, examples of the thermosetting resin include an epoxy resin, a phenol resin, a melamine resin, a urea resin, an unsaturated polyester resin, and an alkyd resin. Those materials may be used alone or in combination.

Of those, an olefin-based resin or a polycarbonate resin is preferred as the material for the plastic-based base material (i.e., the plastic material) because any such resin is particularly excellent in flame retardancy, and the polycarbonate resin is more preferred. The use of the polycarbonate resin as the material for the plastic-based base material can lead to additionally effective expression of the effects of the present invention.

The content of the plastic material in the base material is preferably from 50 wt% to 99.9 wt%, more preferably from 55 wt% to 99 wt%, still more preferably from 60 wt% to 97 wt%, particularly preferably from 65 wt% to 95 wt%. When the content of the plastic material in the base material is adjusted to fall within the range, the flame-retardant composite material of the present invention can express the effects of the present invention in an additionally effective manner.

The content of the polycarbonate resin in the plastic material is preferably from 50 wt% to 100 wt%, more preferably from 70 wt% to 100 wt%, still more preferably from 90 wt% to 100 wt%, particularly preferably from 95 wt% to 100 wt%, most preferably substantially 100 wt%. When the content of the polycarbonate resin in the plastic material is adjusted to fall within the range, the flame-retardant composite material of the present invention can express the effects of the present invention in an additionally effective manner.

The base material may contain an inorganic compound. When the base material contains the inorganic compound, the flame retardancy and strength of the base material can improve. Examples of such inorganic compound include an inorganic flame retardant and an inorganic filler. Examples of the inorganic flame retardant include: a metal hydroxide such as aluminum hydroxide or magnesium hydroxide; a boron-based compound; a phosphorus-based compound; an antimony-based compound; and a sulfur-based flame retardant. Such inorganic compound is preferably the inorganic filler, more preferably a glass fiber because the effects of the present invention can be expressed in an additionally effective manner . Such inorganic compounds may be used alone or in combination.

When the base material contains the inorganic compound, the content of the inorganic compound in the base material is preferably from 0.1 wt% to 50 wt%, more preferably from 1 wt% to 45 wt%, still more preferably from 3 wt% to 40 wt%, particularly preferably from 5 wt% to 35 wt%. When the content of the inorganic compound in the base material is adjusted to fall within the range, the flame-retardant composite material of the present invention can express the effects of the present invention in an additionally effective manner.

The base material may be subjected to any appropriate other flame-retarding treatment. Such flame-retarding treatment is, for example, the addition of an organic flame retardant. Examples of such organic flame retardant include a fluorine-based compound, a chlorine-based compound, a bromine-based compound, a phosphorus-based compound, a silicone-based compound, and a sulfur-based flame retardant. Such organic flame retardants may be used alone or in combination.

It should be noted that out of both surfaces of the base material, the surface on the side where the inorganic oxide particle-containing silicone resin coating film is formed is preferably free from being subjected to any peeling treatment in terms of adhesiveness.

The thickness of the base material can be appropriately selected depending on applications and the like, but an upper limit for the thickness is typically 5,000 µm, preferably 4,000 µm, more preferably 3, 000 µm, and a lower limit for the thickness is preferably 45 µm, more preferably 80 µm, still more preferably 100 µm, particularly preferably 150 µm.

It should be noted that a primer layer in direct contact with both the coating film formed of the silicone resin composition (C) and the base material may be further arranged for improving adhesiveness between the base material and the coating film formed of the silicone resin composition (C).

A compound to be used in the formation of the primer layer is, for example, a component having adhesive properties with both the coating film formed of the silicone resin composition (C) and the base material (including a component that expresses the adhesive properties through curing or a reaction), and specific examples thereof include a silane-based coupling agent (including a partial hydrolysis condensate) and a (meth)acryloyl group-containing organic compound. Of those, a silane-based coupling agent is preferred from the viewpoint that its surface hardly carbonizes at the time of its combustion.

The silane-based coupling agent is, for example, asilane-based coupling agent having, in the same molecule, a reactive functional group such as an amino group, a vinyl group, an epoxy group, a mercapto group, a chloro group, or a (meth) acryloyl group, and a hydrolyzable alkoxysilyl group. An amino group-containing silane coupling agent is preferred from the viewpoint of an anchoring property with the base material.

Examples of the amino group-containing silane coupling agent include 3-aminopropyltrimethoxysilane, 3-aminopropyltriethoxysilane, 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane, aminophenyltrimethoxysilane, aminophenyltriethoxysilane, 3-(N-methylamino)propyltrimethoxysilane, and 3-(N-methylamino)propyltriethoxysilane. Of those, 3-aminopropyltrimethoxysilane or 3-aminopropyltriethoxysilane is preferred from the viewpoint of availability.

A primer treatment for the formation of the primer layer is, for example, a treatment involving applying a material for the primer layer to the surface of the base material by means of a method such as coating, dip coating, or spray coating. In addition, an anchoring effect can be exhibited by incorporating such a solvent as to dissolve the base material into the material for the primer layer to roughen the surface of the base material.

In addition to the primer layer (easy-adhesion layer), a light-diffusing layer, an antireflection layer, an ultraviolet light-absorbing layer, a heat-shielding layer, a heat-insulating layer, or the like may be arranged on at least one surface of the base material to the extent that the flame retardancy of the base material is not impaired.

### [Flame-retardant Composite Material]

The flame-retardant composite material of the present invention can be produced by any appropriate method.

The flame-retardant composite material of the present invention is not limited to a plate shape, and can be used as a material having a specific shape such as a material deformed from a plate-shaped product by thermoforming as well.

The flame-retardant composite material of the present invention can be produced by, for example, arranging the coating film formed of the silicone resin composition (C) containing at least the inorganic oxide particle-containing condensation-reactive silicone resin (coating layer: flame-retardant silicone resin layer) on the adhesive layer or the pressure-sensitive adhesive layer formed on a peeling sheet (separator) to produce a flame-retardant silicone resin-transferred sheet, then peeling the peeling sheet (separator) to expose the adhesive layer or the pressure-sensitive adhesive layer, and bonding the adhesive layer or the pressure-sensitive adhesive layer onto at least one surface of a separately prepared base material.

In addition, the flame-retardant composite material of the present invention can be produced by, for example, forming the adhesive layer or the pressure-sensitive adhesive layer on at least one surface of the base material by application or the like, and then applying the silicone resin composition (C) containing at least the inorganic oxide particle-containing condensation-reactive silicone resin onto the surface of the adhesive layer or the pressure-sensitive adhesive layer to form the coating film.

In addition, the flame-retardant composite material of the present invention can be produced by, for example, applying the silicone resin composition (C) containing at least the inorganic oxide particle-containing condensation-reactive silicone resin onto a thin material to form the coating film, forming the adhesive layer or the pressure-sensitive adhesive layer on the surface of the coating film by application or the like, and then laminating the resultant laminate on at least one surface of the base material.

In addition, the flame-retardant composite material of the present invention can be produced by, for example, applying the silicone resin composition (C) containing at least the inorganic oxide particle-containing condensation-reactive silicone resin onto any appropriate resin base material to form the coating film, separately forming the adhesive layer or the pressure-sensitive adhesive layer on a peeling sheet (separator), then bonding the resin base material side and the adhesive layer or the pressure-sensitive adhesive layer, then peeling the peeling sheet (separator) to expose the adhesive layer or the pressure-sensitive adhesive layer, and bonding the adhesive layer or the pressure-sensitive adhesive layer onto at least one surface of a separately prepared base material.

In addition, the flame-retardant composite material of the present invention can be produced by, for example, applying the silicone resin composition (C) containing at least the inorganic oxide particle-containing condensation-reactive silicone resin onto a thin material to form the coating film, and then melting the thin material of the resultant laminate to laminate the coating film on at least one surface of the base material.

In addition, the flame-retardant composite material of the present invention can be produced by, for example, applying the silicone resin composition (C) containing at least the inorganic oxide particle-containing condensation-reactive silicone resin onto a thin material to form the coating film, forming the adhesive layer or the pressure-sensitive adhesive layer on the surface of the thin material on a side opposite to the coating film by application or the like, and then laminating the resultant laminate on at least one surface of the base material.

The flame-retardant composite material of the present invention can be produced by, for example, laminating the base material and the silicone resin composition, and then forming the laminate into a specific shape. Any appropriate method such as bending, press molding, vacuum forming, or pressure forming can be utilized as a method for the forming.

In addition, the flame-retardant composite material of the present invention can be produced by, for example, forming the base material into a specific shape and then laminating the silicone resin composition that has been turned into a coating film. Any appropriate method such as laminate molding, press molding, vacuum forming, or pressure forming can be utilized as a method for the lamination.

In addition, the flame-retardant composite material of the present invention can be produced by, for example, simultaneously performing the step of forming the base material into a specific shape and the step of laminating the silicone resin composition. Any appropriate method such as in-mold molding or insert molding can be utilized as a method for the forming.

Through the use of any appropriate application method such as kiss coating, gravure coating, bar coating, spray coating, knife coating, wire coating, dip coating, die coating, curtain coating, dispenser coating, screen printing, or metal mask printing as an application method for forming the adhesive layer or the pressure-sensitive adhesive layer or a method of applying the silicone resin composition (C), an applied film may be formed by direct application, followed by drying at, for example, a temperature of from 80°C to 150°C as required.

In order that the storage stability of the silicone resin composition (C) may be improved, and bubble defects and appearance unevenness at the time of the formation of the silicone resin composition (C) into a film may be reduced, a water-soluble organic solvent except an aliphatic monohydric alcohol is preferably added to the silicone resin composition (C) before its application. The usage amount of such water-soluble organic solvent except an aliphatic monohydric alcohol is preferably from 0.01 part by weight to 200 parts by weight, more preferably from 0.1 part by weight to 150 parts by weight with respect to 100 parts by weight of the silicone resin composition (C) (solid content).

Specific examples of the water-soluble organic solvent except an aliphatic monohydric alcohol include: glycol ether-based solvents such as methyl cellosolve (2-methoxyethanol), ethyl cellosolve (2-ethoxyethanol), ethylene glycol isopropyl ether, butyl cellosolve, carbitol, butyl carbitol, diethylene glycol acetate, ethylene glycol monophenyl ether, ethylene glycol monobenzyl ether, methoxymethoxy ethanol, propylene glycol monomethyl ether, propylene glycol monoethyl ether, and ethylene glycol monoacetate; glycol-based solvents such as ethylene glycol, tetraethylene glycol, propylene glycol, and dipropylene glycol; nitrogen-containing solvents such as N-methylpyrrolidone, dimethylformamide, and dimethylacetamide; and dimethyl sulfoxide. Such water-soluble organic solvents except an aliphatic monohydric alcohol may be used alone or in combination. A glycol ether-based solvent is preferred as such water-soluble organic solvent except an aliphatic monohydric alcohol because the solvent has satisfactory solubility for a hydrolyzed alkoxysilane and a condensate thereof.

An upper limit for the thickness of the coating film 2 is preferably 1,000 µm, more preferably 800 µm, still more preferably 500 µm, and a lower limit for the thickness is preferably 5 µm, more preferably 10 µm, still more preferably 20 µm.

The flame-retardant composite material of the present invention may include a protective layer on its surface on a side closer to the coating film formed of the silicone resin composition (C).

A main component for the protective layer is preferably a polymer. The protective layer is preferably, for example, at least one selected from the group consisting of an ultraviolet light-curable hard coat layer, a thermosetting hard coat layer, and an organic-inorganic hybrid hard coat layer. Such protective layer may be formed only of one layer, or may be formed of two or more layers.

The ultraviolet light-curable hard coat layer can be formed of a resin composition containing an ultraviolet light-curable resin. The thermosetting hard coat layer can be formed of a resin composition containing a thermosetting resin. The organic-inorganic hybrid hard coat layer can be formed of a resin composition containing an organic-inorganic hybrid resin.

More specific examples of curable compounds to be used for the above-mentioned resins include a monomer, an oligomer, a polymer, and a silazane compound each having at least one kind selected from the group consisting of a silanol group, a precursor of a silanol group (for example, an alkoxysilyl group or a chlorosilyl group), an acryloyl group, a methacryloyl group, a cyclic ether group, an amino group, and an isocyanate group. Of those, a monomer, an oligomer, or a polymer having a silanol group is preferred from the viewpoint that its surface hardly carbonizes at the time of its combustion.

The resin composition that can form the hard coat layer may further contain any appropriate additive depending on purposes. Examples of such additive include a photoinitiator, a silane coupling agent, a release agent, a curing agent, a curing accelerator, a diluent, an antiaging agent, a denaturant, a surfactant, a dye, a pigment, a discoloration inhibitor, an ultraviolet absorber, a softener, a stabilizer, a plasticizer, and an antifoaming agent. The kinds, the number, and the amounts of the additives contained in the resin composition that can form the hard coat layer may be set as appropriate depending on purposes.

Any appropriate thickness can be adopted as the thickness of the protective layer to the extent that the effects of the present invention are not impaired. Such thickness is preferably from 0.1 µm to 200 µm, more preferably from 0.2 µm to 100 µm, still more preferably from 0.5 µm to 50 µm. When the thickness of the protective layer falls within the range, the layer can express excellent scratch resistance without impairing the flame retardancy of the flame-retardant composite material of the present invention.

Any appropriate thickness can be adopted as the thickness of the flame-retardant composite material of the present invention depending on applications. An upper limit for such thickness is preferably 6,000 µm, more preferably 5,000 µm, still more preferably 4,000 µm, particularly preferably 3,000 µm, and a lower limit for the thickness is preferably 50 µm, more preferably 90 µm, still more preferably 120 µm, particularly preferably 170 µm.

The flame-retardant composite material of the present invention has excellent flame retardancy and preferably has incombustibility. For example, the material hardly allows fire to spread or does not allow the fire to spread in a test in conformity with the combustion test of Japan Railway Rolling Stock & Machinery Association (general material; the 45° ethyl alcohol test of a railway rolling stock nonmetallic material). In addition, the surface of the material preferably shows no carbonization. It should be noted that the term "incombustibility" as used herein means the characteristic by which the surface of the material neither ignites nor carbonizes in the combustion test.

The flame-retardant composite material of the present invention has excellent flame retardancy, and preferably has a low calorific value and a low heat generation rate. For example, even in a test in conformity with the cone calorimeter test of Japan Railway Rolling Stock & Machinery Association (ceiling material; ISO 5660-1), the calorific value and maximum heat generation rate of the material can be reduced, and its ignition time can be delayed. The material preferably has a gross calorific value per 10 minutes of 30 MJ/m² or less, a maximum heat generation rate of 300 kW/m² or less, and an ignition time of 60 seconds or more.

The flame-retardant composite material of the present invention can be utilized as an interior material for transporting machines such as a railway rolling stock, an aircraft, an automobile, a ship, an elevator, and an escalator (transporting machine interior material), a building material, a display material, a home appliance material, or an electronic circuit material because the material is excellent in flame retardancy. In addition, the material can be suitably utilized as a lighting cover, in particular, a lighting cover serving as a transporting machine interior material.

A functional layer such as an antifouling layer, an antistatic layer, a light-diffusing layer, an antireflection layer, an ultraviolet light-absorbing layer, a heat-shielding layer, a heat-insulating layer, a thermally-conductive layer, or a solvent-resistant layer can be provided to the flame-retardant composite material of the present invention, as long as the flame retardancy is not impaired.

The flame-retardant composite material of the present invention may contain any appropriate other component in the plastic-based base material containing the inorganic compound or the coating film, as long as the flame retardancy is not impaired. Such other components may be used alone or in combination.

Examples of the other component include another polymer component, a softener, an antioxidant, an antiaging agent, a curing agent, a plasticizer, a filler, a thermal initiator, a photoinitiator, an ultraviolet absorber, a photostabilizer, a colorant (a pigment, a dye, or the like), a solvent (an organic solvent), and a surfactant (such as an ionic surfactant, a silicone-based surfactant, or a fluorine-based surfactant).

### <<Lighting Apparatus>>

A lighting apparatus of the present invention is a lighting apparatus using the flame-retardant sheet of the present invention, the apparatus including at least a light source for generating light to be used in lighting, and a lighting cover arranged to cover the light source and including the flame-retardant sheet, in which the light from the light source is transmitted by the flame-retardant sheet to be output.

In the lighting apparatus, any appropriate method and arrangement can be adopted as, for example, the manner in which the lighting cover is attached and the arrangement of the lighting cover.

Another lighting apparatus of the present invention is a lighting apparatus using the flame-retardant composite material of the present invention, the apparatus including at least a light source for generating light to be used in lighting, and a lighting cover arranged to cover the light source and including the flame-retardant composite material, in which the light from the light source is transmitted by the flame-retardant composite material to be output.

In the lighting apparatus, any appropriate method and arrangement can be adopted as, for example, the manner in which the lighting cover is attached and the arrangement of the lighting cover.

### Examples

Now, the present invention is more specifically described by way of Examples and Comparative Examples. However, the present invention is by no means limited thereto. It should be noted that, in the following description, "part (s) " and "%" are by weight unless otherwise specified.

### [Synthesis Example 1]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 1.25 hours to perform a reaction between the silsesquioxane compound and a colloidal silica particle surface.

Next, a liquid prepared by dissolving 75 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 75 g of 2-propanol was dropped to the resultant over 3.75 hours to perform a reaction with the silsesquioxane compound on the colloidal silica. The resultant was heated and stirred at 70°C for 1 hour, and was then cooled to room temperature (25°C) to provide a transparent resin composition solution (A).

### [Synthesis Example 2]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 10 g of a silsesquioxane compound having a reactive methoxysilyl group at a molecular terminal thereof (trade name: X-40-9225, manufactured by Shin-Etsu Chemical Co., Ltd., methoxy content: 24%) in 10 g of 2-propanol was dropped to the mixture with a dropping funnel over 0.5 hour to perform a reaction between the silsesquioxane compound and a colloidal silica particle surface.

Next, a liquid prepared by dissolving 90 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 90 g of 2-propanol was dropped to the resultant over 4. 5 hours to perform a reaction with the silsesquioxane compound on the colloidal silica. The resultant was heated and stirred at 70°C for 1 hour, and was then cooled to room temperature (25°C) to provide a transparent resin composition solution (B).

### [Synthesis Example 3]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 4 g of a silsesquioxane compound having a reactive methoxysilyl group at a molecular terminal thereof (trade name: X-40-9225, manufactured by Shin-Etsu Chemical Co., Ltd., methoxy content: 24%) in 4 g of 2-propanol was dropped to the mixture with a dropping funnel over 0.2 hour to perform a reaction between the silsesquioxane compound and a colloidal silica particle surface.

Next, a liquid prepared by dissolving 96 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 96 g of 2-propanol was dropped to the resultant over 4.8 hours to perform a reaction with the silsesquioxane compound on the colloidal silica. The resultant was heated and stirred at 70°C for 1 hour, and was then cooled to room temperature (25°C) to provide a transparent resin composition solution (C).

### [Synthesis Example 4]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 100 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 100 g of 2-propanol was dropped to the mixture over 5 hours to perform a reaction with the silsesquioxane compound on the colloidal silica. The resultant was heated and stirred at 70°C for 1 hour, and was then cooled to room temperature (25°C) to provide a transparent resin composition solution (D).

### [Synthesis Example 5]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 10 g of a silsesquioxane compound having a reactive methoxysilyl group at a molecular terminal thereof (trade name: X-40-9225, manufactured by Shin-Etsu Chemical Co., Ltd., methoxy content: 24%) in 10 g of 2-propanol was dropped to the mixture with a dropping funnel over 0.5 hour to perform a reaction between the silsesquioxane compound and a colloidal silica particle surface.

Next, a liquid prepared by dissolving 90 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 90 g of 2-propanol was dropped to the resultant over 4.5 hours to perform a reaction with the silsesquioxane compound on the colloidal silica. The resultant was heated and stirred at 70°C for 1 hour, and was then cooled to room temperature (25°C) to provide a transparent resin composition solution (E).

### [Synthesis Example 6]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 4 g of a silsesquioxane compound having a reactive methoxysilyl group at a molecular terminal thereof (trade name: X-40-9225, manufactured by Shin-Etsu Chemical Co., Ltd., methoxy content: 24%) in 4 g of 2-propanol was dropped to the mixture with a dropping funnel over 0.2 hour to perform a reaction between the silsesquioxane compound and a colloidal silica particle surface.

Next, a liquid prepared by dissolving 96 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 96 g of 2-propanol was dropped to the resultant over 4.8 hours to perform a reaction with the silsesquioxane compound on the colloidal silica. The resultant was heated and stirred at 70°C for 1 hour, and was then cooled to room temperature (25°C) to provide a transparent resin composition solution (F).

### [Synthesis Example 7]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 100 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 100 g of 2-propanol was dropped to the mixture over 5 hours to perform a reaction with the silsesquioxane compound on the colloidal silica. The resultant was heated and stirred at 70°C for 1 hour, and was then cooled to room temperature (25°C) to provide a transparent resin composition solution (G).

### [Synthesis Example 8]

50 Grams of a colloidal silica solution having an average particle diameter of from 8 nm to 11 nm (trade name: SNOWTEX OS, manufactured by Nissan Chemical Industries, Ltd., solid content concentration : 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 1.25 hours to perform a reaction between the silsesquioxane compound and a colloidal silica particle surface.

Next, a liquid prepared by dissolving 50 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%), and 25 g of a polysiloxane compound having a phenyl group in its molecular chain (trade name: X-40-9227, manufactured by Shin-Etsu Chemical Co., Ltd., methoxy content: 15%) in 75 g of 2-propanol was dropped to the resultant over 3.75 hours to perform a reaction with the silsesquioxane compound on the colloidal silica. The resultant was heated and stirred at 70°C for 1 hour, and was then cooled to room temperature (25°C) to provide a transparent resin composition solution (H).

### [Synthesis Example 9]

An undercoating agent composition solution A was obtained by stirring and mixing 3 parts by weight of aminopropyltrimethoxysilane (trade name: KBM-903, manufactured by Shin-Etsu Chemical Co., Ltd.) with 97 parts by weight of 2-propanol.

### [Synthesis Example 10]

A hard coat agent composition solution A was obtained by stirring and mixing 100 parts by weight of a thermosetting hard coat agent (trade name: EVERHARD 100, manufactured by Ohashi Chemical Industries Ltd.) with 287 parts by weight of 2-propanol and 5 parts by weight of an aluminum-based catalyst (trade name: CAT-AC, manufactured by Shin-Etsu Chemical Co., Ltd.).

### [Synthesis Example 1A]

Glass frits (trade name: VY0053M, manufactured by Nippon Frit Co., Ltd.) and propylene glycol monomethyl ether (manufactured by Wako Pure Chemical Industries, Ltd.) were added to the transparent resin composition solution (A) produced in Synthesis Example 1 in amounts of 200 parts by weight and 100 parts by weight, respectively with respect to 100 parts by weight of a solid content in the transparent resin composition solution, and the mixture was concentrated until its solid content concentration became 90 wt%. After that, the concentrate was mixed and stirred with 10 parts by weight of a phosphoric acid-based catalyst (trade name: X-40-2309A, manufactured by Shin-Etsu Chemical Co., Ltd.). Thus, a silicone resin composition A-1 was obtained.

### [Synthesis Example 1B]

Glass frits (trade name: VY0053M, manufactured by Nippon Frit Co., Ltd.) and propylene glycol monomethyl ether (manufactured by Wako Pure Chemical Industries, Ltd.) were added to the transparent resin composition solution (A) produced in Synthesis Example 1 in amounts of 150 parts by weight and 100 parts by weight, respectively with respect to 100 parts by weight of a solid content in the transparent resin composition solution, and the mixture was concentrated until its solid content concentration became 88 wt%. After that, the concentrate was mixed and stirred with 10 parts by weight of a phosphoric acid-based catalyst (trade name : X-40-2309A, manufactured by Shin-Etsu Chemical Co., Ltd.). Thus, a silicone resin composition A-2 was obtained.

### [Synthesis Example 2A]

A silicone resin composition B-1 was obtained in the same manner as in Synthesis Example 1A except that the transparent resin composition solution (B) produced in Synthesis Example 2 was used instead of the transparent resin composition solution (A) produced in Synthesis Example 1.

### [Synthesis Example 2B]

A silicone resin composition B-2 was obtained in the same manner as in Synthesis Example 1B except that the transparent resin composition solution (B) produced in Synthesis Example 2 was used instead of the transparent resin composition solution (A) produced in Synthesis Example 1.

### [Synthesis Example 3A]

A silicone resin composition C-1 was obtained in the same manner as in Synthesis Example 1A except that the transparent resin composition solution (C) produced in Synthesis Example 3 was used instead of the transparent resin composition solution (A) produced in Synthesis Example 1.

### [Synthesis Example 3B]

A silicone resin composition C-2 was obtained in the same manner as in Synthesis Example 1B except that the transparent resin composition solution (C) produced in Synthesis Example 3 was used instead of the transparent resin composition solution (A) produced in Synthesis Example 1.

### [Synthesis Example 4A]

A silicone resin composition D-1 was obtained in the same manner as in Synthesis Example 1A except that the transparent resin composition solution (D) produced in Synthesis Example 4 was used instead of the transparent resin composition solution (A) produced in Synthesis Example 1.

### [Synthesis Example 4B]

A silicone resin composition D-2 was obtained in the same manner as in Synthesis Example 1B except that the transparent resin composition solution (D) produced in Synthesis Example 4 was used instead of the transparent resin composition solution (A) produced in Synthesis Example 1.

### [Synthesis Example 5A]

A silicone resin composition E-1 was obtained in the same manner as in Synthesis Example 1A except that the transparent resin composition solution (E) produced in Synthesis Example 5 was used instead of the transparent resin composition solution (A) produced in Synthesis Example 1.

### [Synthesis Example 5B]

A silicone resin composition E-2 was obtained in the same manner as in Synthesis Example 1B except that the transparent resin composition solution (E) produced in Synthesis Example 5 was used instead of the transparent resin composition solution (A) produced in Synthesis Example 1.

### [Synthesis Example 6A]

A silicone resin composition F-1 was obtained in the same manner as in Synthesis Example 1A except that the transparent resin composition solution (F) produced in Synthesis Example 6 was used instead of the transparent resin composition solution (A) produced in Synthesis Example 1.

### [Synthesis Example 6B]

A silicone resin composition F-2 was obtained in the same manner as in Synthesis Example 1B except that the transparent resin composition solution (F) produced in Synthesis Example 6 was used instead of the transparent resin composition solution (A) produced in Synthesis Example 1.

### [Synthesis Example 7A]

A silicone resin composition G-1 was obtained in the same manner as in Synthesis Example 1A except that the transparent resin composition solution (G) produced in Synthesis Example 7 was used instead of the transparent resin composition solution (A) produced in Synthesis Example 1.

### [Synthesis Example 7B]

A silicone resin composition G-2 was obtained in the same manner as in Synthesis Example 1B except that the transparent resin composition solution (G) produced in Synthesis Example 7 was used instead of the transparent resin composition solution (A) produced in Synthesis Example 1.

### [Synthesis Example 8A]

A silicone resin composition H-1 was obtained in the same manner as in Synthesis Example 1A except that the transparent resin composition solution (H) produced in Synthesis Example 8 was used instead of the transparent resin composition solution (A) produced in Synthesis Example 1.

### [Synthesis Example 8B]

A silicone resin composition H-2 was obtained in the same manner as in Synthesis Example 1B except that the transparent resin composition solution (H) produced in Synthesis Example 8 was used instead of the transparent resin composition solution (A) produced in Synthesis Example 1.

### [Example A1]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition A-1 obtained in Synthesis Example 1A was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet (A1) was obtained.

### [Examples A2 to A14]

Flame-retardant silicone resin-transferred sheets (A2) to (A14) were each obtained in the same manner as in Example A1 except that the silicone resin composition A-1 obtained in Synthesis Example 1A was changed as shown in Table 1.

**[Table 1]**

| | Silicone resin composition |
|---|---|
| Example A1 | A-1 |
| Example A2 | B-1 |
| Example A3 | C-1 |
| Example A4 | D-1 |
| Example A5 | E-1 |
| Example A6 | F-1 |
| Example A7 | G-1 |
| Example A8 | H-1 |
| Example A9 | B-2 |
| Example A10 | C-2 |
| Example A11 | D-2 |
| Example A12 | E-2 |
| Example A13 | F-2 |
| Example A14 | G-2 |

### [Example A15]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 250 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet (A15) was obtained.

### [Examples A16 to A20]

Flame-retardant silicone resin-transferred sheets (A16) to (A20) were each obtained in the same manner as in Example A15 except that the silicone resin composition B-2 obtained in Synthesis Example 2B was changed as shown in Table 2.

**[Table 2]**

| | Silicone resin composition |
|---|---|
| Examples A15, A21, A27, A33, A39, A45, A51, A57 | B-2 |
| Examples A16, A22, A28, A34, A40, A46, A52, A58 | C-2 |
| Examples A17, A23, A29, A35, A41, A47, A53, A59 | D-2 |
| Examples A18, A24, A30, A36, A42, A48, A54, A60 | E-2 |
| Examples A19, A25, A31, A37, A43, A49, A55, A61 | F-2 |
| Examples A20, A26, A32, A38, A44, A50, A56, A62 | G-2 |

### [Example A21]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet (A21) was obtained.

### [Examples A22 to A26]

Flame-retardant silicone resin-transferred sheets (A22) to (A26) were each obtained in the same manner as in Example A21 except that the silicone resin composition B-2 obtained in Synthesis Example 2B was changed as shown in Table 2.

### [Example A27]

The silicone resin composition B-2 obtained in Synthesis Example 2B was applied onto a polyethylene terephthalate (PET) film (thickness: 12 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110 °C for 2 minutes. Thus, a flame-retardant silicone resin-transferred sheet (A27) was obtained.

### [Examples A28 to A32]

Flame-retardant silicone resin-transferred sheets (A28) to (A32) were each obtained in the same manner as in Example A27 except that the silicone resin composition B-2 obtained in Synthesis Example 2B was changed as shown in Table 2.

### [Example A33]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: "PES-314SX30", solid content concentration: 30 wt%, manufactured by Toagosei Co., Ltd.) was applied onto the PET film surface of the flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, a flame-retardant silicone resin-transferred sheet (A33) was obtained.

### [Examples A34 to A38]

Flame-retardant silicone resin-transferred sheets (A34) to (A38) were each obtained in the same manner as in Example A33 except that the silicone resin composition B-2 obtained in Synthesis Example 2B was changed as shown in Table 2.

### [Example A39]

The silicone resin composition B-2 obtained in Synthesis Example 2B was applied onto a polycarbonate (PC) film (thickness: 100 µm, trade name: Panlite Film D-100, manufactured by Teijin Limited) with an applicator manufactured by Tester Sangyo Co., Ltd. so that its thickness after drying became 150 µm. After that, the resultant was heated and dried with a hot air-circulating oven at 100°C for 3 minutes and at 140°C for 6 minutes. Thus, a flame-retardant silicone resin-transferred sheet (A39) was obtained.

### [Examples A40 to A44]

Flame-retardant silicone resin-transferred sheets(A40) to (A44) were each obtained in the same manner as in Example A39 except that the silicone resin composition B-2 obtained in Synthesis Example 2B was changed as shown in Table 2.

### [Example A45]

The silicone resin composition B-2 obtained in Synthesis Example 2B was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, the hard coat agent composition solution A obtained in Synthesis Example 10 was applied onto the flame-retardant silicone resin sheet with a Meyer bar so that its thickness after drying became 2 µm. After that, the resultant was heated and dried with a hot air-circulating oven at 140°C for 3 minutes. Thus, a scratch-resistant flame-retardant silicone resin sheet was obtained.

Next, the polyethylene terephthalate film subjected to the peeling treatment of the scratch-resistant flame-retardant silicone resin sheet was peeled, and a polyester-based hot-melt adhesive (trade name: PES-314SX30, solid content concentration: 30 wt%, manufactured by Toagosei Co. , Ltd.) was applied to the peeled surface of the scratch-resistant flame-retardant silicone resin sheet with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, a scratch-resistant flame-retardant silicone resin-transferred sheet (A45) was obtained.

### [Examples A46 to A50]

Flame-retardant silicone resin-transferred sheets (A46) to (A50) were each obtained in the same manner as in Example A45 except that the silicone resin composition B-2 obtained in Synthesis Example 2B was changed as shown in Table 2.

### [Example A51]

The silicone resin composition B-2 obtained in Synthesis Example 2B was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, an ultraviolet light-curable hard coat agent (trade name: 8KX-077, manufactured by Taisei Fine Chemical Co. , Ltd.) was applied onto the flame-retardant silicone resin sheet with a Meyer bar so that its thickness after drying became 2 µm. After that, the resultant was heated and dried with a hot air-circulating oven at 100°C for 3 minutes, and was subjected to a curing treatment by being irradiated with ultraviolet light (illuminance: 100 mW/cm², light quantity: 700mJ/cm²) from a high-pressure mercury lamp. Thus, a scratch-resistant flame-retardant silicone resin sheet was obtained.

Next, the polyethylene terephthalate film subjected to the peeling treatment of the scratch-resistant flame-retardant silicone resin sheet was peeled, and a polyester-based hot-melt adhesive (trade name: PES-314SX30, solid content concentration: 30 wt%, manufactured by Toagosei Co. , Ltd.) was applied to the peeled surface of the scratch-resistant flame-retardant silicone resin sheet with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, a scratch-resistant flame-retardant silicone resin-transferred sheet (A51) was obtained.

### [Examples A52 to A56]

Flame-retardant silicone resin-transferred sheets (A52) to (A56) were each obtained in the same manner as in Example A51 except that the silicone resin composition B-2 obtained in Synthesis Example 2B was changed as shown in Table 2.

### [Example A57]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, the hard coat agent composition solution A obtained in Synthesis Example 10 was applied onto the flame-retardant silicone resin sheet with a Meyer bar so that its thickness after drying became 2 µm. After that, the resultant was heated and dried with a hot air-circulating oven at 140°C for 3 minutes. Thus, a scratch-resistant flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the scratch-resistant flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, a flame-retardant silicone resin-transferred sheet (A57) was obtained.

### [Examples A58 to A62]

Flame-retardant silicone resin-transferred sheets (A58) to (A62) were each obtained in the same manner as in Example A57 except that the silicone resin composition B-2 obtained in Synthesis Example 2B was changed as shown in Table 2.

### [Synthesis Example 11]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 65°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 2 hours to perform a reaction between the silsesquioxane compound and a colloidal silica particle surface.

Next, a liquid prepared by dissolving 75 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 75 g of 2-propanol was dropped to the resultant over 1 hour to perform a reaction with the silsesquioxane compound on the colloidal silica. The resultant was heated and stirred at 65°C for 1 hour, and was then cooled to room temperature (25°C) to provide a liquid transparent resin composition solution X.

### [Synthesis Example 12]

Glass frits (trade name: VY0053M, manufactured by Nippon Frit Co., Ltd.) and 2-methoxyethanol (manufactured by Wako Pure Chemical Industries, Ltd.) were added to the transparent resin composition solution X obtained in Synthesis Example 11 in amounts of 200 parts by weight and 100 parts by weight, respectively with respect to 100 parts by weight of a solid content in the transparent resin composition solution, and the contents were stirred and mixed to provide a silicone resin composition P.

### [Synthesis Example 13]

An undercoating agent composition solution Y was obtained by stirring and mixing 3 parts by weight of aminopropyltrimethoxysilane (trade name: SILQUEST A-1110, manufactured by Momentive Performance Materials Inc.) with 77 parts by weight of 2-propanol and 20 parts by weight of butanol.

### [Example A63]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes, and then the polyethylene terephthalate film was peeled. Thus, a flame-retardant silicone resin-transferred sheet (A63) was obtained.

### [Example A64]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 250 µm. After that, the resultant was heated and dried with a hot air-circulating oven at 100°C for 2 minutes and at 140°C for 2 minutes, and then the polyethylene terephthalate film was peeled. Thus, a flame-retardant silicone resin-transferred sheet (A64) was obtained.

### [Example A65]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 4 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes, and then the polyethylene terephthalate film was peeled. Thus, a flame-retardant silicone resin-transferred sheet (A65) was obtained.

### [Example A66]

The undercoating agent composition solution Y obtained in Synthesis Example 13 was applied onto a polycarbonate sheet (thickness: 200 µm, trade name: PC-2151, manufactured by Teijin Limited) with a Meyer bar so that its thickness after drying became 1 µm. After that, the resultant was heated and dried with a hot air-circulating oven at 120°C for 3 minutes. Thus, a polycarbonate sheet subjected to an undercoating treatment was obtained.

The silicone resin composition P obtained in Synthesis Example 12 was concentrated until its solid content concentration became 90 wt%. After that, the concentrate was applied onto the polycarbonate sheet subjected to the undercoating treatment with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin polycarbonate sheet was obtained.

Next, a polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

The flame-retardant silicone resin polycarbonate sheet and the adhesive sheet were bonded so that the polycarbonate film surface of the former sheet and the adhesive surface of the latter sheet were brought into contact with each other, and the polyethylene terephthalate film was peeled. Thus, a flame-retardant silicone resin-transferred sheet (A66) was obtained.

### [Comparative Example 1]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the transparent resin composition solution X obtained in Synthesis Example 11 was concentrated until its solid content concentration became 75 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes, and then the polyethylene terephthalate film was peeled. Thus, a silicone resin-transferred sheet (C1) was obtained.

### <<Evaluation>>

The sheets and the like obtained in Examples A1 to A66 and Comparative Example 1 were subjected to the following evaluations. The results are shown in Table 3 to Table 7.

### (Evaluation for Adhesive Property)

The flame-retardant silicone resin-transferred sheets obtained in Examples and the silicone resin-transferred sheet obtained in Comparative Example were each bonded to an adherend (100 mm×100 mm) with a laminator at 0.5 m/min, a pressure of 0.2 MPa, and 140°C. A polycarbonate plate (thickness: 1,500 µm, trade name: Panlite Sheet PC-1151, manufactured by Teijin Limited) was used as the adherend.

Whether or not the flame-retardant silicone resin-transferred sheet or the silicone resin-transferred sheet peeled from the adherend when the temperature of the sample returned to normal temperature was evaluated. The sample in which the flame-retardant silicone resin-transferred sheet or the silicone resin-transferred sheet did not peel was evaluated as Symbol "○", and the sample in which the flame-retardant silicone resin-transferred sheet or the silicone resin-transferred sheet peeled was evaluated as Symbol "×".

### (Combustion Test)

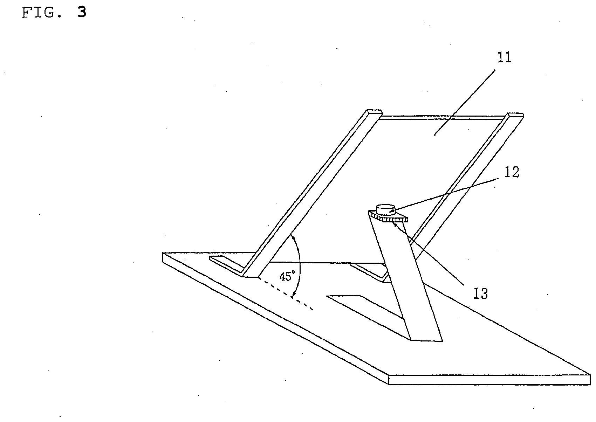

A combustion test was performed with a combustion test apparatus illustrated in FIG. **3** in conformity with the combustion test of Japan Railway Rolling Stock & Machinery Association (general material; the 45° ethyl alcohol test of a nonmetallic material for railway rolling stock).

In FIG. **3****,** reference numeral **11** represents a specimen (182 mm×257 mm), reference numeral **12** represents an alcohol container (made of iron, 17.5 ϕ×7.1, 0.8 t), and reference numeral **13** represents a container holder (made of a material having a low thermal conductivity such as cork) . A distance from the center of the lower surface of the specimen to the bottom surface of the container is 25.4 mm (1 inch).

The flame-retardant silicone resin-transferred sheets obtained in Examples and the silicone resin-transferred sheet obtained in Comparative Example were each held at a tilt of 45° as illustrated in FIG. **3** under a state in which the adhesive layer surface faced upward. The fuel container (alcohol container) **12** was mounted on the cork base (container holder) **13** so that the center of the bottom of the fuel container **12** was placed at a position 25.4 mm vertically below the center of the lower surface of the specimen. 0.5 Cubic centimeter of ethyl alcohol was loaded into the fuel container **12** and ignited, and the fuel was left to stand for about 2 minutes until the fuel burned off. The presence or absence of the ignition or carbonization of the sample was visually observed and evaluated by the following criteria.

### <Ignition and Carbonization>

○: The sample neither ignites nor carbonizes during the combustion of ethanol.
×: The sample ignites and carbonizes during the combustion of ethanol.

### <Penetration and Melt Dropping>

o: Flame does not penetrate the sample and the sample does not melt to drop within 1 minute from the initiation of the combustion of ethanol.
×: Flame penetrates the sample or the sample melts to drop within 1 minute from the initiation of the combustion of ethanol.

### (Cone Calorimeter Test)

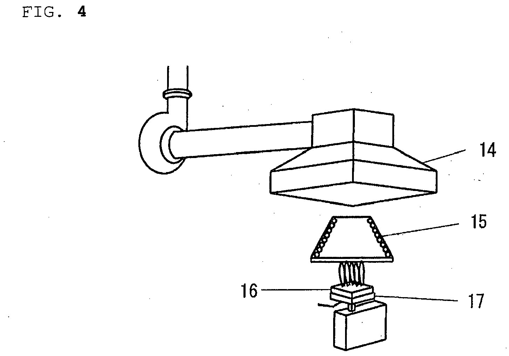

A planar square-shaped test piece 100 mm on a side was cut out, and as illustrated in FIG. **4****,** the test piece was burnt by being irradiated with heat rays having an energy density of 50 kW/m² for 10 minutes according to a method in conformity with ISO 5660-1:2002 through the use of a cone calorimeter. In FIG. **4****,** reference numeral **14** represents an exhaust hood, reference numeral **15** represents a cone-type heater, reference numeral **16** represents a specimen, and reference numeral **17** represents a specimen holder. A combustion judgment is performed on the basis of a gross calorific value (MJ/m²) and a maximum heat generation rate (kW/m²) measured during a test time, and an ignition time (second (s)). The ignition time (second(s)) was determined as follows: the case where flame was present for 10 seconds or more after the observation of the flame from the test piece was regarded as the case where the test piece ignited, and a time period from the initiation of the test to the first observation of the ignition was defined as the ignition time. In addition, the presence or absence of the penetration of the flame through the test piece was visually observed.

### <Judgment Criteria>

### (1) Gross Calorific Value per 10 Minutes

○: The gross calorific value is less than 30 MJ/m².
×: The gross calorific value is 30 MJ/m² or more.

### (2) Maximum Heat Generation Rate per 10 Minutes

○: The maximum heat generation rate is less than 300 kW/m².
×: The maximum heat generation rate is 300 kW/m² or more.

### (3) Ignition Time

○: The ignition time is 60 seconds or more.
×: The ignition time is less than 60 seconds.

### (4) Penetration

○: The penetration is absent.
×: The penetration is present.

### (Scratch Resistance)

Steel wool #0000 was uniformly attached to a smooth section of a cylinder having a diameter of 25 mm, and the resultant was pressed against the surface of a flame-retardant composite material sample under the condition of a load of 400 g. It should be noted that the cylinder having attached thereto the steel wool was reciprocated on the surface of the flame-retardant composite material sample at about 100 mm/sec 10 times. Then, after the reciprocation, whether a flaw having a width of 10 µm or more was made in the surface of the flame-retardant composite material sample was visually observed and judged in accordance with the following criteria.
○: The surface has no flaw.
Δ: The surface has a fine flaw but the flaw affects the visibility of the sample to a small extent.
×: The surface has a conspicuous flaw and the flaw impairs the visibility of the sample.

### (Total Light Transmittance)

A total light transmittance was measured with a haze meter ("HM-150" manufactured by Murakami Color Research Laboratory) in conformity with JIS 7361.

**[Table 3]**

| | Combustion test | | Cone calorimeter test | | | | Total light transmittance (%) |
|---|---|---|---|---|---|---|---|
| | Ignition and carbonization | Penetration and melt dropping | Gross calorific value | Maximum heat generation rate | Ignition time | Penetration | |
| Example A1 | ○ | ○ | ○ | ○ | ○ | ○ | 51.9 |
| Example A2 | ○ | ○ | ○ | ○ | ○ | ○ | 51.6 |
| Example A3 | ○ | ○ | ○ | ○ | ○ | ○ | 52.0 |
| Example A4 | ○ | ○ | ○ | ○ | ○ | ○ | 51.0 |
| Example A5 | ○ | ○ | ○ | ○ | ○ | ○ | 53.2 |
| Example A6 | ○ | ○ | ○ | ○ | ○ | ○ | 51.3 |
| Example A7 | ○ | ○ | ○ | ○ | ○ | ○ | 52.1 |
| Example A8 | ○ | ○ | ○ | ○ | ○ | ○ | 65.2 |
| Example A9 | ○ | ○ | ○ | ○ | ○ | ○ | - |
| Example A10 | ○ | ○ | ○ | ○ | ○ | ○ | - |
| Example A11 | ○ | ○ | ○ | ○ | ○ | ○ | - |
| Example A12 | ○ | ○ | ○ | ○ | ○ | ○ | - |
| Example A13 | ○ | ○ | ○ | ○ | ○ | ○ | - |
| Example A14 | ○ | ○ | ○ | ○ | ○ | ○ | - |

**[Table 4]**

| | Combustion test | | Cone calorimeter test | | | |
|---|---|---|---|---|---|---|
| | Ignition and carbonization | Penetration and melt dropping | Gross calorific value | Maximum heat generation rate | Ignition time | Penetration |
| Example A15 | ○ | ○ | ○ | ○ | ○ | ○ |
| Example A16 | ○ | ○ | ○ | ○ | ○ | ○ |
| Example A17 | ○ | ○ | ○ | ○ | ○ | ○ |
| Example A18 | ○ | ○ | ○ | ○ | ○ | ○ |
| Example A19 | ○ | ○ | ○ | ○ | ○ | ○ |
| Example A20 | ○ | ○ | ○ | ○ | ○ | ○ |
| Example A21 | ○ | ○ | ○ | ○ | ○ | ○ |
| Example A22 | ○ | ○ | ○ | ○ | ○ | ○ |
| Example A23 | ○ | ○ | ○ | ○ | ○ | ○ |
| Example A24 | ○ | ○ | ○ | ○ | ○ | ○ |
| Example A25 | ○ | ○ | ○ | ○ | ○ | ○ |
| Example A26 | ○ | ○ | ○ | ○ | ○ | ○ |

**[Table 5]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example A27 | ○ | ○ | ○ | ○ | ○ | ○ | - |
| Example A28 | ○ | ○ | ○ | ○ | ○ | ○ | - |
| Example A29 | ○ | ○ | ○ | ○ | ○ | ○ | - |
| Example A30 | ○ | ○ | ○ | ○ | ○ | ○ | - |
| Example A31 | ○ | ○ | ○ | ○ | ○ | ○ | - |
| Example A32 | ○ | ○ | ○ | ○ | ○ | ○ | - |
| Example A33 | ○ | ○ | ○ | ○ | ○ | ○ | × |
| Example A34 | ○ | ○ | ○ | ○ | ○ | ○ | × |
| Example A35 | ○ | ○ | ○ | ○ | ○ | ○ | × |
| Example A36 | ○ | ○ | ○ | ○ | ○ | ○ | × |
| Example A37 | ○ | ○ | ○ | ○ | ○ | ○ | × |
| Example A38 | ○ | ○ | ○ | ○ | ○ | ○ | × |
| Example A39 | ○ | ○ | ○ | ○ | ○ | ○ | - |
| Example A40 | ○ | ○ | ○ | ○ | ○ | ○ | - |
| Example A41 | ○ | ○ | ○ | ○ | ○ | ○ | - |
| Example A42 | ○ | ○ | ○ | ○ | ○ | ○ | - |
| Example A43 | ○ | ○ | ○ | ○ | ○ | ○ | - |
| Example A44 | ○ | ○ | ○ | ○ | ○ | ○ | - |

**[Table 6]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation ra t e | Ignition time | Penetration | |
| Example A45 | ○ | ○ | ○ | ○ | ○ | ○ | ○ |
| Example A46 | ○ | ○ | ○ | ○ | ○ | ○ | ○ |
| Example A47 | ○ | ○ | ○ | ○ | ○ | ○ | ○ |
| Example A48 | ○ | ○ | ○ | ○ | ○ | ○ | ○ |
| Example A49 | ○ | ○ | ○ | ○ | ○ | ○ | ○ |
| Example A50 | ○ | ○ | ○ | ○ | ○ | ○ | ○ |
| Example A51 | ○ | ○ | ○ | ○ | ○ | ○ | ○ |
| Example A52 | ○ | ○ | ○ | ○ | ○ | ○ | ○ |
| Example A53 | ○ | ○ | ○ | ○ | ○ | ○ | ○ |
| Example A54 | ○ | ○ | ○ | ○ | ○ | ○ | ○ |
| Example A55 | ○ | ○ | ○ | ○ | ○ | ○ | ○ |
| Example A56 | ○ | ○ | ○ | ○ | ○ | ○ | ○ |
| Example A57 | ○ | ○ | ○ | ○ | ○ | ○ | ○ |
| Example A58 | ○ | ○ | ○ | ○ | ○ | ○ | ○ |
| Example A59 | ○ | ○ | ○ | ○ | ○ | ○ | ○ |
| Example A60 | ○ | ○ | ○ | ○ | ○ | ○ | ○ |
| Example A61 | ○ | ○ | ○ | ○ | ○ | ○ | ○ |
| Example A62 | ○ | ○ | ○ | ○ | ○ | ○ | ○ |

**[Table 7]**

| | Evaluation for adhesive property | Combustion test | | Cone calorimeter test | | | |
|---|---|---|---|---|---|---|---|
| | | Ignition and carbonization | Penetration and melt dropping | Gross calorific value | Maximum heat generation rate | Ignition time | Penetration |
| Example A63 | ○ | ○ | ○ | ○ | ○ | ○ | ○ |
| Example A64 | ○ | ○ | ○ | ○ | ○ | ○ | ○ |
| Example A65 | ○ | ○ | ○ | ○ | ○ | ○ | ○ |
| Example A66 | ○ | ○ | ○ | ○ | ○ | ○ | ○ |
| Comparative Example 1 | ○ | ○ | × | ○ | ○ | ○ | × |

### [Example B1]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition A-1 obtained in Synthesis Example 1A was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30 wt%, trade name: TARFLON G1930T, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B1) was obtained.

### [Examples B2 to B14]

Flame-retardant composite materials (B2) to (B14) were each obtained in the same manner as in Example B1 except that the silicone resin composition A-1 obtained in Synthesis Example 1A was changed as shown in Table 8.

**[Table 8]**

| | Silicone resin composition |
|---|---|
| Example B1 | A-1 |
| Example B2 | B-1 |
| Example B3 | C-1 |
| Example B4 | D-1 |
| Example B5 | E-1 |
| Example B6 | F-1 |
| Example B7 | G-1 |
| Example B8 | H-1 |
| Example B9 | B-2 |
| Example B10 | C-2 |
| Example B11 | D-2 |
| Example B12 | E-2 |
| Example B13 | F-2 |
| Example B14 | G-2 |

### [Example B15]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 250 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30wt%, trade name: TARFLON G1930T, manufactured by Idemitsu Kosan Co. , Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B15) was obtained.

### [Examples B16 to B20]

Flame-retardant composite materials (B16) to (B20) were each obtained in the same manner as in Example B15 except that the silicone resin composition B-2 obtained in Synthesis Example 2B was changed as shown in Table 9.

**[Table 9]**

| | Silicone resin composition |
|---|---|
| Examples B15, B21, B27, B33, B39, B45, B51, B57, B63, B69, B75 | B-2 |
| Examples B16, B22, B28, B34, B40, B46, B52, B58, B64, B70, B76 | C-2 |
| Examples B17, B23, B29, B35, B41, B47, B53, B59, B65, B71, B77 | D-2 |
| Examples B18, B24, B30, B36, B42, B48, B54, B60, B66, B72, B78 | E-2 |
| Examples B19, B25, B31, B37, B43, B49, B55, B61, B67, B73, B79 | F-2 |
| Examples B20, B26, B32, B38, B44, B50, B56, B62, B68, B74, B80 | G-2 |

### [Example B21]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 10 wt%, trade name: TARFLON G1910T, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B21) was obtained.

### [Examples B22 to B26]

Flame-retardant composite materials (B22) to (B26) were each obtained in the same manner as in Example B21 except that the silicone resin composition B-2 obtained in Synthesis Example 2B was changed as shown in Table 9.

### [Example B27]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B27) was obtained.

### [Examples B28 to B32]

Flame-retardant composite materials (B28) to (B32) were each obtained in the same manner as in Example B27 except that the silicone resin composition B-2 obtained in Synthesis Example 2B was changed as shown in Table 9.

### [Example B33]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B33) was obtained.

### [Examples B34 to B38]

Flame-retardant composite materials (B34) to (B38) were each obtained in the same manner as in Example B33 except that the silicone resin composition B-2 obtained in Synthesis Example 2B was changed as shown in Table 9.

### [Example B39]

A hot-melt adhesive (trade name: G-2S, manufactured by Jujo Chemical Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 4 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B39) was obtained.

### [Examples B40 to B44]

Flame-retardant composite materials (B40) to (B44) were each obtained in the same manner as in Example B39 except that the silicone resin composition B-2 obtained in Synthesis Example 2B was changed as shown in Table 9.

### [Example B45]

The silicone resin composition B-2 obtained in Synthesis Example 2B was applied onto a polyethylene terephthalate (PET) film (thickness: 12 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes . Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B45) was obtained.

### [Examples B46 to B50]

Flame-retardant composite materials (B46) to (B50) were each obtained in the same manner as in Example B45 except that the silicone resin composition B-2 obtained in Synthesis Example 2B was changed as shown in Table 2.

### [Example B51]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B51) was obtained.

### [Examples B52 to B56]

Flame-retardant composite materials (B52) to (B56) were each obtained in the same manner as in Example B51 except that the silicone resin composition B-2 obtained in Synthesis Example 2B was changed as shown in Table 2.

### [Example B57]

The silicone resin composition B-2 obtained in Synthesis Example 2B was applied onto a polycarbonate (PC) film (thickness: 100 µm, trade name: Panlite Film D-100, manufactured by Teijin Limited) with an applicator manufactured by Tester Sangyo Co., Ltd. so that its thickness after drying became 150 µm. After that, the resultant was heated and dried with a hot air-circulating oven at 100°C for 3 minutes and at 140°C for 6 minutes. Thus, a flame-retardant silicone resin-transferred sheet was obtained.

Next, the PC film surface of the flame-retardant silicone resin-transferred sheet was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min and 160°C. Thus, a flame-retardant composite material (B57) was obtained.

### [Examples B58 to B62]

Flame-retardant composite materials (B58) to (B62) were each obtained in the same manner as in Example B57 except that the silicone resin composition B-2 obtained in Synthesis Example 2B was changed as shown in Table 2.

### [Example B63]

The silicone resin composition B-2 obtained in Synthesis Example 2B was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, the hard coat agent composition solution A obtained in Synthesis Example 10 was applied onto the flame-retardant silicone resin sheet with a Meyer bar so that its thickness after drying became 2 µm. After that, the resultant was heated and dried with a hot air-circulating oven at 140°C for 3 minutes. Thus, a scratch-resistant flame-retardant silicone resin sheet was obtained.

Next, the polyethylene terephthalate film subjected to the peeling treatment of the scratch-resistant flame-retardant silicone resin sheet was peeled, and a polyester-based hot-melt adhesive (trade name: PES-314SX30, solid content concentration: 30 wt%, manufactured by Toagosei Co., Ltd.) was applied to the peeled surface of the scratch-resistant flame-retardant silicone resin sheet with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, a scratch-resistant flame-retardant silicone resin-transferred sheet was obtained.

Next, the scratch-resistant flame-retardant silicone resin-transferred sheet was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B63) was obtained.

### [Examples B64 to B68]

Flame-retardant composite materials (B64) to (B68) were each obtained in the same manner as in Example B63 except that the silicone resin composition B-2 obtained in Synthesis Example 2B was changed as shown in Table 2.

### [Example B69]

The silicone resin composition B-2 obtained in Synthesis Example 2B was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, an ultraviolet light-curable hard coat agent (trade name: 8KX-077, manufactured by Taisei Fine Chemical Co., Ltd.) was applied onto the flame-retardant silicone resin sheet with a Meyer bar so that its thickness after drying became 2 µm. After that, the resultant was heated and dried with a hot air-circulating oven at 100°C for 3 minutes, and was subjected to a curing treatment by being irradiated with ultraviolet light (illuminance: 100 mW/cm², light quantity: 700 mJ/cm²) from a high-pressure mercury lamp. Thus, a scratch-resistant flame-retardant silicone resin sheet was obtained.

Next, the polyethylene terephthalate film subjected to the peeling treatment of the scratch-resistant flame-retardant silicone resin sheet was peeled, and a polyester-based hot-melt adhesive (trade name: PES-314SX30, solid content concentration: 30 wt%, manufactured by Toagosei Co., Ltd.) was applied to the peeled surface of the scratch-resistant flame-retardant silicone resin sheet with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, a scratch-resistant flame-retardant silicone resin-transferred sheet was obtained.

Next, the scratch-resistant flame-retardant silicone resin-transferred sheet was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B69) was obtained.

### [Examples B70 to B74]

Flame-retardant composite materials (B70) to (B74) were each obtained in the same manner as in Example B69 except that the silicone resin composition B-2 obtained in Synthesis Example 2B was changed as shown in Table 2.

### [Example B75]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, the hard coat agent composition solution A obtained in Synthesis Example 10 was applied onto the flame-retardant silicone resin sheet with a Meyer bar so that its thickness after drying became 2 µm. After that, the resultant was heated and dried with a hot air-circulating oven at 140°C for 3 minutes. Thus, a scratch-resistant flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the scratch-resistant flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B75) was obtained.

### [Examples B76 to B80]

Flame-retardant composite materials (B76) to (B80) were each obtained in the same manner as in Example B75 except that the silicone resin composition B-2 obtained in Synthesis Example 2B was changed as shown in Table 2.

### [Example B81]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1, 300 µm), which had been produced by subjecting a glass fiber-reinforced polycarbonate resin (glass fiber content: 30 wt%, trade name: TARFLON G1930, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B81) was obtained.

### [Example B82]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 250 µm. After that, the resultant was heated and dried with a hot air-circulating oven at 100°C for 2 minutes and at 140°C for 2 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm), which had been produced by subjecting a glass fiber-reinforced polycarbonate resin (glass fiber content: 30 wt%, trade name: TARFLON G1930, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B82) was obtained.

### [Example B83]

A polyester-based hot-melt adhesive (trade name: PES-314SX30, solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 4 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm, 100 mm×100 mm), which had been produced by subjecting a glass fiber-reinforced polycarbonate resin (glass fiber content: 30 wt%, trade name: TARFLON G1930, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B83) was obtained.

### [Example B84]

The undercoating agent composition solution Y obtained in Synthesis Example 13 was applied onto a polycarbonate sheet (thickness: 200 µm, trade name: PC-2151, manufactured by Teijin Limited) with a Meyer bar so that its thickness after drying became 1 µm. After that, the resultant was heated and dried with a hot air-circulating oven at 120°C for 3 minutes. Thus, a polycarbonate sheet subjected to an undercoating treatment was obtained.

The silicone resin composition P obtained in Synthesis Example 12 was concentrated until its solid content concentration became 90 wt%. After that, the concentrate was applied onto the polycarbonate sheet subjected to the undercoating treatment with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin polycarbonate sheet was obtained.

Next, a polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

The flame-retardant silicone resin polycarbonate sheet and the adhesive sheet were bonded so that the polycarbonate film surface of the former sheet and the adhesive surface of the latter sheet were brought into contact with each other, and the polyethylene terephthalate film was peeled. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a glass fiber-reinforced polycarbonate plate (thickness: 1,300 µm, 100 mm×100 mm), which had been produced by subjecting a glass fiber-reinforced polycarbonate resin (glass fiber content: 30 wt%, trade name: TARFLON G1930, manufactured by Idemitsu Kosan Co., Ltd.) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (B84) was obtained.

### [Example B85]

A polyester-based hot-melt adhesive (trade name: PES-314SX30, solid content concentration: 30 wt%, manufactured by Toagosei Co., Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition P obtained in Synthesis Example 12 was concentrated until its solid content concentration became 90 wt%. After that, the concentrate was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin-transferred sheet was obtained.

Next, the polyethylene terephthalate film subjected to the peeling treatment of the flame-retardant silicone resin-transferred sheet was peeled, and the resultant was bonded to a polycarbonate plate (thickness: 1,500 µm, trade name: Panlite Sheet PC-1151, manufactured by Teijin Limited) with a laminator at 0.5 m/min, a pressure of 0.2 MPa, and 140°C. Thus, a flame-retardant composite material (B85) was obtained.

### [Comparative Example 2]

A glass fiber-reinforced polycarbonate plate (thickness: 1,300 µm), which had been produced by subjecting a glass fiber-reinforced polycarbonate resin (trade name: TARFLON G1910, manufactured by Idemitsu Kosan Co., Ltd.) to vacuum pressing with a vacuum pressing machine at a pressure of 0.4 MPa and 220°C, was subjected to an evaluation alone.

### [Comparative Example 3]

A polycarbonate plate (thickness: 1,500 µm, trade name: Panlite Sheet PC-1151, manufactured by Teijin Limited) was subjected to an evaluation alone.

### <<Evaluation>>

The flame-retardant composite materials and the like obtained in Examples B1 to B85 and Comparative Examples 2 and 3 were subjected to the same evaluations as those described above. The results are shown in Table 10 to Table 15.

**[Table 10]**

| | Combustion test | | Cone calorimeter test | | | | Total light transmittance (%) |
|---|---|---|---|---|---|---|---|
| | Ignition and carbonization | Penetration and melt dropping | Gross calorific value | Maximum heat generation rate | Ignition time | Penetration | |
| Example B1 | ○ | ○ | ⊚ | ⊚ | ○ | ○ | 51.9 |
| Example B2 | ○ | ○ | ⊚ | ⊚ | ○ | ○ | 51.6 |
| Example B3 | ○ | ○ | ⊚ | ⊚ | ○ | ○ | 52.0 |
| Example B4 | ○ | ○ | ⊚ | ⊚ | ○ | ○ | 51.0 |
| Example B5 | ○ | ○ | ⊚ | ⊚ | ○ | ○ | 53.2 |
| Example B6 | ○ | ○ | ⊚ | ⊚ | ○ | ○ | 51.3 |
| Example B7 | ○ | ○ | ⊚ | ⊚ | ○ | ○ | 52.1 |
| Example B8 | ○ | ○ | ⊚ | ⊚ | ○ | ○ | 65.2 |
| Example B9 | ○ | ○ | ⊚ | ⊚ | ○ | ○ | - |
| Example B10 | ○ | ○ | ⊚ | ⊚ | ○ | ○ | - |
| Example B11 | ○ | ○ | ⊚ | ⊚ | ○ | ○ | - |
| Example B12 | ○ | ○ | ⊚ | ⊚ | ○ | ○ | - |
| Example B13 | ○ | ○ | ⊚ | ⊚ | ○ | ○ | - |
| Example B14 | ○ | ○ | ⊚ | ⊚ | ○ | ○ | - |

**[Table 11]**

| | Combustion test | | Cone calorimeter test | | | |
|---|---|---|---|---|---|---|
| | Ignition and carbonization | Penetration and melt dropping | Gross calorific value | Maximum heat generation rate | Ignition time | Penetration |
| Example B15 | ○ | ○ | ⊚ | ⊚ | ○ | ○ |
| Example B16 | ○ | ○ | ⊚ | ⊚ | ○ | ○ |
| Example B17 | ○ | ○ | ⊚ | ⊚ | ○ | ○ |
| Example B18 | ○ | ○ | ⊚ | ⊚ | ○ | ○ |
| Example B19 | ○ | ○ | ⊚ | ⊚ | ○ | ○ |
| Example B20 | ○ | ○ | ⊚ | ⊚ | ○ | ○ |
| Example B21 | ○ | ○ | ○ | ○ | ○ | ○ |
| Example B22 | ○ | ○ | ○ | ○ | ○ | ○ |
| Example B23 | ○ | ○ | ○ | ○ | ○ | ○ |
| Example B24 | ○ | ○ | ○ | ○ | ○ | ○ |
| Example B25 | ○ | ○ | ○ | ○ | ○ | ○ |
| Example B26 | ○ | ○ | ○ | ○ | ○ | ○ |

**[Table 12]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example B27 | ○ | ○ | ⊚ | ⊚ | ○ | ○ | × |
| Example B28 | ○ | ○ | ⊚ | ⊚ | ○ | ○ | × |
| Example B29 | ○ | ○ | ⊚ | ⊚ | ○ | ○ | × |
| Example B30 | ○ | ○ | ⊚ | ⊚ | ○ | ○ | × |
| Example B31 | ○ | ○ | ⊚ | ⊚ | ○ | ○ | × |
| Example B32 | ○ | ○ | ⊚ | ⊚ | ○ | ○ | × |
| Example B33 | ○ | ○ | ⊚ | ⊚ | ○ | ○ | - |
| Example B34 | ○ | ○ | ⊚ | ⊚ | ○ | ○ | - |
| Example B35 | ○ | ○ | ⊚ | ⊚ | ○ | ○ | - |
| Example B36 | ○ | ○ | ⊚ | ⊚ | ○ | ○ | - |
| Example B37 | ○ | ○ | ⊚ | ⊚ | ○ | ○ | - |
| Example B38 | ○ | ○ | ⊚ | ⊚ | ○ | ○ | - |
| Example B39 | ○ | ○ | ⊚ | ⊚ | ○ | ○ | - |
| Example B40 | ○ | ○ | ⊚ | ⊚ | ○ | ○ | - |
| Example B41 | ○ | ○ | ⊚ | ⊚ | ○ | ○ | - |
| Example B42 | ○ | ○ | ⊚ | ⊚ | ○ | ○ | - |
| Example B43 | ○ | ○ | ⊚ | ⊚ | ○ | ○ | - |
| Example B44 | ○ | ○ | ⊚ | ⊚ | ○ | ○ | - |

**[Table 13]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example B45 | ○ | ○ | ⊚ | ⊚ | ○ | ○ | - |
| Example B46 | ○ | ○ | ⊚ | ⊚ | ○ | ○ | - |
| Example B47 | ○ | ○ | ⊚ | ⊚ | ○ | ○ | - |
| Example B48 | ○ | ○ | ⊚ | ⊚ | ○ | ○ | - |
| Example B49 | ○ | ○ | ⊚ | ⊚ | ○ | ○ | - |
| Example B50 | ○ | ○ | ⊚ | ⊚ | ○ | ○ | - |
| Example B51 | ○ | ○ | ⊚ | ⊚ | ○ | ○ | × |
| Example B52 | ○ | ○ | ⊚ | ⊚ | ○ | ○ | × |
| Example B53 | ○ | ○ | ⊚ | ⊚ | ○ | ○ | × |
| Example B54 | ○ | ○ | ⊚ | ⊚ | ○ | ○ | × |
| Example B55 | ○ | ○ | ⊚ | ⊚ | ○ | ○ | × |
| Example B56 | ○ | ○ | ⊚ | ⊚ | ○ | ○ | × |
| Example B57 | ○ | ○ | ⊚ | ⊚ | ○ | ○ | - |
| Example B58 | ○ | ○ | ⊚ | ⊚ | ○ | ○ | - |
| Example B59 | ○ | ○ | ⊚ | ⊚ | ○ | ○ | - |
| Example B60 | ○ | ○ | ⊚ | ⊚ | ○ | ○ | - |
| Example B61 | ○ | ○ | ⊚ | ⊚ | ○ | ○ | - |
| Example B62 | ○ | ○ | ⊚ | ⊚ | ○ | ○ | - |

**[Table 14]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example B63 | ○ | ○ | ⊚ | ⊚ | ○ | ○ | ○ |
| Example B64 | ○ | ○ | ⊚ | ⊚ | ○ | ○ | ○ |
| Example B65 | ○ | ○ | ⊚ | ⊚ | ○ | ○ | ○ |
| Example B66 | ○ | ○ | ⊚ | ⊚ | ○ | ○ | ○ |
| Example B67 | ○ | ○ | ⊚ | ⊚ | ○ | ○ | ○ |
| Example B68 | ○ | ○ | ⊚ | ⊚ | ○ | ○ | ⊚ |
| Example B69 | ○ | ○ | ⊚ | ⊚ | ○ | ○ | ○ |
| Example B70 | ○ | ○ | ⊚ | ⊚ | ○ | ○ | ○ |
| Example B71 | ○ | ○ | ⊚ | ⊚ | ○ | ○ | ○ |
| Example B72 | ○ | ○ | ⊚ | ⊚ | ○ | ○ | ○ |
| Example B73 | ○ | ○ | ⊚ | ⊚ | ○ | ○ | ○ |
| Example B74 | ○ | ○ | ⊚ | ⊚ | ○ | ○ | ○ |
| Example B75 | ○ | ○ | ⊚ | ⊚ | ○ | ○ | ○ |
| Example B76 | ○ | ○ | ⊚ | ⊚ | ○ | ○ | ○ |
| Example B77 | ○ | ○ | ⊚ | ⊚ | ○ | ○ | ○ |
| Example B78 | ○ | ○ | ⊚ | ⊚ | ○ | ○ | ○ |
| Example B79 | ○ | ○ | ⊚ | ⊚ | ○ | ○ | ○ |
| Example B80 | ○ | ○ | ⊚ | ⊚ | ○ | ○ | ○ |

**[Table 15]**

| | Combustion test | | Cone calorimeter test | | | |
|---|---|---|---|---|---|---|
| | Ignition and carbonization | Penetration and melt dropping | Gross calorific value | Maximum heat generation rate | Ignition time | Penetration |
| Example B81 | ○ | ○ | ⊚ | ⊚ | ○ | ○ |
| Example B82 | ○ | ○ | ⊚ | ⊚ | ○ | ○ |
| Example B83 | ○ | ○ | ⊚ | ⊚ | ○ | ○ |
| Example B84 | ○ | ○ | ⊚ | ⊚ | ○ | ○ |
| Example B85 | ○ | ○ | ○ | ○ | ○ | ○ |
| Comparative Example 2 | × | O | × | × | × | ○ |
| Comparative Example 3 | × | × | × | × | × | × |

The flame-retardant sheet of the present invention is useful as a lighting apparatus, in particular, a lighting apparatus to be used in an application where non-carbonizability is required such as a railway rolling stock application because the sheet shows extremely high flame retardancy. The flame-retardant composite material of the present invention is useful as a lighting apparatus, in particular, a lighting apparatus to be used in an application where non-carbonizability is required such as a railway rolling stock application because the material shows extremely high flame retardancy despite including a combustible base material.

### Reference Signs List

- **1**: adhesive layer
- **2**: coating film (coating layer)
- **3**: flame-retardant sheet
- **4**: base material
- **5**: flame-retardant composite material
- **11**: specimen
- **12**: alcohol container (fuel container)
- **13**: container holder
- **14**: exhaust hood
- **15**: cone-type heater
- **16**: specimen
- **17**: specimen holder

## Claims

1. A flame-retardant sheet, comprising:
a coating film formed of a silicone resin composition (C) containing at least an inorganic oxide particle-containing condensation-reactive silicone resin, wherein the content of the inorganic oxide particles in the inorganic oxide particle-containing condensation-reactive silicone resin is 1 wt% to 30 wt%; and
an adhesive layer or a pressure-sensitive adhesive layer,
wherein the silicone resin composition (C) contains: a condensation-reactive silicone resin (A) formed of a cross-linked structural body in which inorganic oxide particles dispersed in a polysiloxane resin having a condensation-reactive group and the polysiloxane resin are cross-linked by a chemical bond; and additional inorganic particles (B), wherein the additional inorganic particles (B) are not chemically bonded to the polysiloxane resin having a condensation-reactive group and wherein the content of the additional inorganic particles (B) in the silicone resin composition (C)is from 0.1 part by weight to 500 parts by weight with respect to 100 parts by weight of the condensation reactive silicone resin (A).

2. The flame-retardant sheet according to claim 1, wherein the inorganic particles (B) comprise at least one kind selected from glass frits, silica particles, alumina particles, aluminum hydroxide particles, magnesium hydroxide particles, tin oxide particles, and clay mineral particles.

3. The flame-retardant sheet according to claim 2, wherein the glass frits serving as the inorganic particles (B) each have a yield point of 300°C or more and 700°C or less.

4. The flame-retardant sheet according to claim 2 or 3, wherein the glass frits serving as the inorganic particles (B) are each formed of at least one kind of component selected from silicic acid, boric acid, borosilicic acid, aluminum oxide, calcium oxide, sodium oxide, lithium oxide, and phosphorus oxide.

5. The flame-retardant sheet according to claim 4, wherein the glass frits serving as the inorganic particles (B) are each formed of a component containing at least phosphorus oxide.

6. The flame-retardant sheet according to any one of claims 2 to 5, wherein the glass frits serving as the inorganic particles (B) have an average particle diameter of from 0.1 µm to 1,000 µm.

7. The flame-retardant sheet according to any one of claims 1 to 6, wherein the flame-retardant sheet has incombustibility in a combustion test of a railway rolling stock material combustion test of the "Japan Railway Rolling Stock & Machinery Association", as indicated in the description.

8. The flame-retardant sheet according to any one of claims 1 to 7, wherein the flame-retardant sheet has a gross calorific value per 10 minutes of 30 MJ/m² or less, a maximum heat generation rate of 300 kW/m² or less, and an ignition time of 60 seconds or more in a cone calorimeter test of a railway rolling stock material combustion test of the "Japan Railway Rolling Stock & Machinery Association", as indicated in the description.

9. The flame-retardant sheet according to any one of claims 1 to 8, wherein the flame-retardant sheet is used as a transporting machine interior material, wherein the transporting machine interior material comprises a lighting cover.

10. A flame-retardant composite material, comprising the flame-retardant sheet of any one of claims 1 to 8 on at least one surface side of a base material, the flame-retardant composite material having the adhesive layer or the pressure-sensitive adhesive layer between the base material and the coating film.

11. A lighting apparatus using the flame-retardant sheet of any one of claims 1 to 9, comprising at least:
a light source for generating light to be used in lighting; and
a lighting cover arranged to cover the light source and including the flame-retardant sheet,
wherein the light from the light source is transmitted by the flame-retardant sheet to be output.

12. A lighting apparatus using the flame-retardant composite material of claim 10, comprising at least:
a light source for generating light to be used in lighting; and
a lighting cover arranged to cover the light source and including the flame-retardant composite material,
wherein the light from the light source is transmitted by the flame-retardant composite material to be output.

## Patentansprüche

1. Flammhemmende Folie, umfassend:
einen Beschichtungsfilm, der aus einer Silikonharzzusammensetzung (C) gebildet ist, die mindestens ein kondensationsreaktives Silikonharz enthält, das anorganische Oxidteilchen enthält, wobei der Gehalt der anorganischen Oxidteilchen in dem kondensationsreaktiven Silikonharz, das anorganische Oxidteilchen enthält, 1 Gew.-% bis 30 Gew.-% beträgt; und
eine Haftschicht oder eine druckempfindliche Haftschicht,
wobei die Silikonharzzusammensetzung (C) enthält: ein kondensationsreaktives Silikonharz (A), das aus einem vernetzten Strukturkörper, in dem anorganische Oxidteilchen, die in einem Polysiloxanharz mit einer kondensationsreaktiven Gruppe verteilt sind, und das Polysiloxanharz durch eine chemische Bindung vernetzt sind, gebildet ist; und zusätzliche anorganische Teilchen (B), wobei die zusätzlichen anorganischen Teilchen (B) nicht chemisch an das Polysiloxanharz mit einer kondensationsreaktiven Gruppe gebunden sind und wobei der Gehalt der zusätzlichen anorganischen Teilchen (B) in der Silikonharzzusammensetzung (C) von 0,1 Gewichtsteile bis 500 Gewichtsteile, bezogen auf 100 Gewichtsteile des kondensationsreaktiven Silikonharzes (A), beträgt.

2. Flammhemmende Folie nach Anspruch 1, wobei die anorganischen Teilchen (B) mindestens eine Art, ausgewählt aus Glasfritten, Siliciumdioxid-Teilchen, Aluminiumoxid-Teilchen, Aluminiumhydroxid-Teilchen, Magnesiumhydroxid-Teilchen, Zinnoxid-Teilchen und Tonmineral-Teilchen, umfassen.

3. Flammhemmende Folie nach Anspruch 2, wobei die Glasfritten, die als die anorganischen Teilchen (B) dienen, jeweils einen Fließpunkt von 300°C oder mehr und 700°C oder weniger aufweisen.

4. Flammhemmende Folie nach Anspruch 2 oder 3, wobei die Glasfritten, die als anorganische Teilchen (B) dienen, jeweils aus mindestens einer Art von Bestandteil, ausgewählt aus Kieselsäure, Borsäure, Borkieselsäure, Aluminiumoxid, Calciumoxid, Natriumoxid, Lithiumoxid und Phosphoroxid, gebildet sind.

5. Flammhemmende Folie nach Anspruch 4, wobei die Glasfritten, die als anorganische Teilchen (B) dienen, jeweils aus einem Bestandteil, der zumindest Phosphoroxid enthält, gebildet sind.

6. Flammhemmende Folie nach einem der Ansprüche 2 bis 5, wobei die Glasfritten, die als die anorganischen Teilchen (B) dienen, einen durchschnittlichen Teilchendurchmesser von 0,1 µm bis 1000 µm aufweisen.

7. Flammhemmende Folie nach einem der Ansprüche 1 bis 6, wobei die flammhemmende Folie Unbrennbarkeit in einem Brennbarkeitstest eines Eisenbahnfahrzeugmaterial-Brennbarkeitstests der "Japan Railway Rolling Stock & Machinery Association", wie in der Beschreibung beschrieben, aufweist.

8. Flammhemmende Folie nach einem der Ansprüche 1 bis 7, wobei die flammhemmende Folie einen Bruttobrennwert pro 10 Minuten von 30 MJ/m² oder weniger, eine maximale Wärmeerzeugungsrate von 300 kW/m² oder weniger und eine Zündzeit von 60 Sekunden oder mehr in einem Kegel-Kalorimetertest eines Eisenbahnfahrzeugmaterial-Brennbarkeitstests der "Japan Railway Rolling Stock & Machinery Association", wie in der Beschreibung beschrieben, aufweist.

9. Flammhemmende Folie nach einem der Ansprüche 1 bis 8, wobei die flammhemmende Folie als ein Transportmaschinen-Innenmaterial verwendet wird, wobei das Transportmaschinen-Innenmaterial eine Beleuchtungsabdeckung umfasst.

10. Flammhemmendes Verbundmaterial, umfassend die flammhemmende Folie nach einem der Ansprüche 1 bis 8 auf mindestens einer Oberflächenseite eines Grundmaterials, wobei das flammhemmende Verbundmaterial die Haftschicht oder die druckempfindliche Haftschicht zwischen dem Grundmaterial und dem Beschichtungsfilm aufweist.

11. Beleuchtungsvorrichtung, welche die flammhemmende Folie nach einem der Ansprüche 1 bis 9 verwendet, zumindest umfassend:
eine Lichtquelle zur Erzeugung von Licht zur Verwendung zur Beleuchtung; und
eine Beleuchtungsabdeckung, angeordnet, um die Lichtquelle abzudecken, und die flammhemmende Folie einschließend,
wobei das Licht der Lichtquelle durch die flammhemmende Folie übertragen wird, um ausgegeben zu werden.

12. Beleuchtungsvorrichtung, welche das flammhemmende Verbundmaterial nach Anspruch 10 verwendet, zumindest umfassend:
eine Lichtquelle zur Erzeugung von Licht zur Verwendung zur Beleuchtung; und
eine Beleuchtungsabdeckung, angeordnet, um die Lichtquelle abzudecken, und das flammhemmende Verbundmaterial einschließend,
wobei das Licht der Lichtquelle durch das flammhemmende Verbundmaterial übertragen wird, um ausgegeben zu werden.

## Revendications

1. Feuille retardatrice de flamme, comprenant:
un film de revêtement constitué d'une composition de résine siliconée (C) contenant au moins une résine siliconée réagissant à la condensation et contenant des particules d'oxyde inorganiques, la teneur en particules d'oxyde inorganiques dans la résine siliconée réagissant à la condensation et contenant des particules d'oxyde inorganiques est dans la gamme allant de 1% en poids à 30% en poids; et
une couche adhésive ou une couche adhésive sensible à la pression,
dans laquelle la composition de résine siliconée (C) contient: une résine siliconée réagissant à la condensation (A) formée d'un corps structurel réticulé dans lequel les particules d'oxyde inorganiques dispersées dans une résine de polysiloxane ayant un groupement réagissant à la condensation et la résine de polysiloxane sont réticulées par une liaison chimique; et des particules inorganiques additionnelles (B), les particules inorganiques (B) additionnelles n'étant pas chimiquement liées à la résine de polysiloxane ayant un groupement réagissant à la condensation et où la teneur en particules inorganiques (B) additionnelles dans la composition de résine siliconée (C) est dans la gamme allant de 0,1 partie en poids à 500 parties en poids sur base de 100 parties en poids de la résine siliconée (A) réagissant à la condensation.

2. Feuille retardatrice de flamme selon la revendication 1, dans laquelle les particules inorganiques (B) comprennent au moins un type sélectionné parmi des frittes de verre, des particules de silice, des particules d'alumine, des particules d'hydroxyde d'aluminium, des particules d'hydroxyde de magnésium, des particules d'oxyde d'étain et des particules de minéral argileux.

3. Feuille retardatrice de flamme selon la revendication 2, dans laquelle les frittes de verre servant de particules inorganiques (B) ont chacune un seuil d'écoulement de 300°C ou plus et de 700°C ou moins.

4. Feuille retardatrice de flamme selon la revendication 2 ou 3, dans laquelle les frittes de verre servant de particules inorganiques (B) sont chacune formées d'au moins un type de composant sélectionné parmi l'acide silicique, l'acide borique, l'acide borosilicique, l'oxyde d'aluminium, l'oxyde de calcium, l'oxyde de sodium, l'oxyde de lithium et l'oxyde de phosphore.

5. Feuille retardatrice de flamme selon la revendication 4, dans laquelle les frittes de verre servant de particules inorganiques (B) sont chacune formées d'un composant contenant au moins de l'oxyde de phosphore.

6. Feuille retardatrice de flamme selon l'une quelconque des revendications 2 à 5, dans laquelle les frittes de verre servant de particules inorganiques (B) ont un diamètre particulaire moyen allant de 0,1 µm à 1000 µm.

7. Feuille retardatrice de flamme selon l'une quelconque des revendications 1 à 6, dans laquelle la feuille retardatrice de flamme présente une incombustibilité dans un test de combustion d'un test de combustion pour matériel ferroviaire roulant de la « *Japan Railway Rolling Stock* & *Machinery Association* », comme indiqué dans la description.

8. Feuille retardatrice de flamme selon l'une quelconque des revendications 1 à 7, dans laquelle la feuille retardatrice de flamme présente une valeur calorifique brute par 10 minutes de 30 MJ/m² ou moins, une vitesse de production de chaleur maximale de 300 kW/m² ou moins et une durée d'allumage de 60 secondes ou plus lors d'un test au calorimètre conique d'un test de combustion pour matériel ferroviaire roulant de la *« Japan Railway Rolling Stock* & *Machinery Association* », comme indiqué dans la description.

9. Feuille retardatrice de flamme selon l'une quelconque des revendications 1 à 8, dans laquelle la feuille retardatrice de flamme est utilisée comme matière d'intérieur de machine de transport, dans laquelle la matière d'intérieur de la machine de transport comprend un recouvrement d'éclairage.

10. Matériau composite retardateur de flamme, comprenant la feuille retardatrice de flamme selon l'une quelconque des revendications 1 à 8 sur au moins un côté de surface d'un matériau de base, le matériau composite retardateur de flamme ayant la couche adhésive ou la couche adhésive sensible à la pression située entre le matériau de base et le film de revêtement.

11. Appareil d'éclairage utilisant la feuille retardatrice de flamme selon l'une quelconque des revendications 1 à 9, comprenant au moins:
une source lumineuse pour produire de la lumière à utiliser dans un éclairage;
et
un recouvrement d'éclairage disposé pour recouvrir la source lumineuse et comprenant la feuille retardatrice de flamme,
la lumière provenant de la source lumineuse étant transmise par la feuille retardatrice de flamme pour être émise.

12. Appareil d'éclairage utilisant le matériau composite retardateur de flamme selon la revendication 10, comprenant au moins:
une source lumineuse pour produire de la lumière à utiliser dans un éclairage;
et
un recouvrement d'éclairage disposé pour recouvrir la source lumineuse et comprenant le matériau composite retardateur de flamme,
la lumière provenant de la source lumineuse étant transmise par la feuille retardatrice de flamme pour être émise.
